# EUROPEAN PATENT APPLICATION

(11) **EP 3 928 619 A1**
(43) Date of publication of application: **29.12.2021**
(21) Application number: 21188589.2
(22) Date of filing: 11.09.2018
(51) Int. Cl.: A01N 25/30, A01N 43/08, A01N 43/16, A01N 57/12, A01P 1/00, A01P 3/00, A23B 7/00

(54) **A METHOD FOR TREATING AND CONTROLLING POST-HARVEST PHYSIOLOGICAL DISORDERS IN FRUIT VIA EDIBLE COATINGS**

(30) Priority: 22.09.2017 ES 201731140
(62) Divisional of application: 18779448.2
(71) Applicant: Decco Worldwide Post-Harvest Holdings B.V., 3196 KE Rotterdam (NL)
(72) Inventor: GÓMEZ HERNÁNDEZ, Enrique, 3196 KE Rotterdam (NL); AKHTER, Sohail, 3196 KE Rotterdam (NL)
(74) Representative: HGF

(57) **Abstract**

The present invention describes the method for treating and controlling physiological disorders that are caused during the post-harvest process of fruit, which comprises the application of an aqueous solution which is a edible coating and said coating comprising at least one phospholipid, or at least one polysorbate, or at least a sorbitan ester, or at least a sucrose ester of fatty acids or at least a sucroglyceride of fatty acids or a combination thereof the application being during any one of the stages of the post-harvest process to their shipment and sale at their final destination.

## Description

### Field of the invention

The present invention belongs to the field of Chemical Industry, more specifically the sector of agricultural chemistry and horticulture.

The present invention describes a method for treating fruits and vegetables, more specifically pome fruits, such as apples, pears and kiwis; tropical fruits, such as avocados, mangos and papaya; and stone fruits, such as peaches, plums, cherries, nectarines, to mention just a few, in the preservation, post-preservation and/or transport to the final destination processes which comprises the application of an aqueous formulation which is a edible coating and said coating comprising at least one phospholipid, or at least one polysorbate, or at least a sorbitan ester, or at least a sucro ester of fatty acids or at least a sucroglyceride of fatt acids or a combination thereof.

### Background art of the invention

Fruits and vegetables, especially citric fruits, but also pome fruits such as apples, pears, peaches and even tropical fruits, must be subjected to a preservation process for long periods of time, among others, after the harvesting thereof and during the post-harvest or post-picking period, which comprises the time passed since the picking thereof until it reaches the consumer. The most common process to which fruits and vegetables are subjected is cold storage.

However, during the period, which comprises all the stages from harvesting the fruits to their sale and shipment at their final destination, the fruits tend to suffer different kind of physiological damage, such as scald in case of pome fruit such as apples and pears, which is characterised by irregular patches on their skin.

These patches are an oxidation effect caused by volatiles generated by the fruits themselves, in the metabolic pathway of which ethylene is involved, or due to a breakdown in the tissues caused by its own senescence, which also causes a type of scald due to the effects of various enzymes that cause the oxidation of the tissues. This scald effect, which takes place inside the preservation chamber, has traditionally been resolved by means of various anti-scald treatments, among which the use of chemical products such as diphenylamine (DPA) and ethoxyquin are noteworthy. Their antioxidant effect is so great that it controls both the scald caused by volatiles and enzyme oxidation because it inhibits the effects thereof. However, these treatments are not yet authorised in many countries.

Another means of controlling scald is by means of chemical agents that inhibit the ethylene, which, as mentioned above, is part of the metabolic pathway for producing volatiles. These chemical agents are generally cyclic, short-chain hydrocarbons, the most commonly used being 1-Methylcyclopropene (1-MCP).

Parallel to these chemical treatments, improvements in the cold storage processes have been made. Maintaining the fruit at low temperatures causes the metabolism of the fruit to slow down, which, in addition to delaying aging, reduces respiration and, therefore, the climacteric, thus reducing the production of ethylene. This reduces the production of the volatiles responsible for scald. Furthermore, the low temperature also has an impact by delaying the breakdown of the tissues by enzyme action.

The cold storage process has improved over the last 40 years with the commercial introduction of cold storage in controlled atmosphere (CA) chambers that consist of sealed chambers with specific gas conditions: low oxygen concentration and high carbon dioxide concentration. These conditions slow the metabolism of the fruit to an even greater extent, which reduces the physiological damages and ageing or ripening even more. This enables the preservation period to be increased whilst maintaining suitable organoleptic properties.

Subsequently, with the aim of improving these preservation processes, the working parameters of the controlled atmospheres have been optimised over the years, such that there are other types of cold storage such as Ultra Low Oxygen, or ULO, and Dynamic Controlled Atmosphere, or DCA, which focus on reducing scald. These methods, which we could classify as physical preservation methods, held reduce physiological disorders, but are not as effective in some climates as in others and they are also very expensive preservation processes. This gives rise to the need to find effective and cheaper methods, although they are not sufficient to completely control scalds in the majority of situations, or they are excessively costly.

In addition, during the handling and preparation processes, whether fruit harvested directly from the fields or obtained in a preparation chamber, and due to the sensitivity of the skin thereof, the fruit may suffer damages due to friction, which is referred to as friction scald. This type of scald is manifested through a browning of the skin that is similar to the physiological scald caused during cold storage or post-preservation, although any person skilled in the art may easily identify the differences. These patches on the skin greatly reduce its commercial value.

Moreover, it must be noted that during the post-harvest process, the fruit may also suffer rotting processes caused by microorganisms. These processes are characterised by a softening of the fruit tissue and colour change. This phenomenon, given that it takes place at the same time as the scald, contributes to the deterioration and loss of the organoleptic quality of the fruit.

It is worth highlighting the fact that this control of the scald, enables physiological disorders and reduction of the organoleptic quality to be maintained to a certain extend whilst the fruit is inside the chamber. This is even more so if the cold storage chamber operates with Controlled Atmosphere (CA), ULO or DCA technology.

However, when this preservation process ends, the fruit often has to remain in the chamber with normal atmosphere (NA) for long periods of time during its preparation, handling, sale and shipment to its final destination, and even more time if the final destination is so far away that transportation takes weeks.

The end of the controlled atmosphere and changing to preservation in normal atmosphere entails stress in the fruit which causes an acceleration in the metabolism and the physiological effects that have been slowed during the cold storage period. This, as well as the fact that the side effect of the antioxidants and coatings described above have lost the preserving activity thereof, means that it is very common for scald problems to arise during this period, in addition to the acceleration of the senescence of the fruit, which also makes it more sensitive to friction scald. Furthermore, if the preservation period in normal atmosphere is increased to more than 6 months, these scald effects greatly increase. On top of this, if long-distance shipping of the product is factored in, this transport time may be similar to an increase in preservation time, and if it is after controlled atmosphere, this increase in preservation time in the condition stated entails an increase in the scald and senescence problems, especially when the conditions are not suitable.

A last undesired effect, and which is related to the above effects, is that the fruit over-ripens during the preparation process and transport, once cold storage has ended.

Based on the foregoing, it would be desirable to have effective methods for treating and preventing physiological disorders caused during the post-harvest process.

Therefore, the present invention provides an effective method for treatment, during the post-harvest period via the application of edible coatings that reduce the damages due to physiological scald and friction scald in case of pome fruit as well as delaying the ageing of the fruit after it has been removed from the cold storage chamber and/or during handling, preparation and transport to the final destination processes, and also in case of other crops controlling the physiological or physical disorders specific for each crop which arise during postharvest processes, via the application of an aqueous formulation which is a edible coating and said coating comprising at least one phospholipid, or at least one polysorbate, or at least a sorbitan ester, or at least or a sucrose ester of fatty acids or at least a sucroglyceride of fatty acids or a combination thereof.

### DESCRIPTION OF THE INVENTION

### Brief description of the invention

The present invention describes the method for treating and controlling the physiological disorders that are caused during the post-harvest process of fruits that comprises the application of an aqueous formulation, as described in the present document. Another object of the present invention is the treatment for delaying the ageing of fruit after the removal thereof from the cold storage chamber. An aqueous formulation comprising at least one phospholipid, or at least one polysorbate, or at least a sorbitan ester, or at least a sucrose ester of fatty acids or at least a sucroglyceride of fatty acids of fatty acids or a combination thereof, in order to treat harvested fruits, as described in the present application, is also an object of the present invention. Preferably, the aqueous formulation is applied in post-harvest processes of fruits for treating and controlling physiological disorders caused during the post-harvest process.

In the context of the present invention, the term "post-harvest process" is the process that may comprise the phases from harvesting the fruit to its final destination, i.e., the picking, handling, preparation and transport to its final destination.

The method of applying said aqueous formulation could take place during the period of post harvesting, which comprises all the stages, from harvesting the fruit to their sale, such as harvesting, handling, storage, either in controlled atmosphere or in normal atmosphere, processing, packaging, transportation and marketing.

In the context of the present document, the aqueous formulation is also referred to as coating.

Likewise, the present invention is applied for treating pome fruits, such as apples and pears, by means of showering, soaking, drencher or spray application, before it is put into the cold storage chamber to delay the scald of the fruit and to delay ripening, senescence and weight loss during said cold storage process.

This invention is also beneficial to improve and extend the post-harvest life of other crops, such as stone fruits, for example, plums, peaches, nectarines or kiwis, avocados, which are also known as alligator pears, among other crops.

In all cases, the formulation of the invention is an aqueous formulation comprising at least one phospholipid, or at least one polysorbate, or at least a sorbitan ester, or at least a sucrose ester of fatty acids or at least a sucroglyceride of fatty acids or a combination thereof.

In a preferred embodiment, as an alternative to the use of chemical antioxidants and ethylene blockers, the present document describes the method of applying said coating, by means of the production of internal atmospheres in the fruit, delay surprisingly the decomposition, and therefore, the ageing of the tissues, also delaying the scald problems. The coating comprises at least one phospholipid, preferably lecithin, at least one sucrose ester of fatty acids or sucroglyceride, and additionally, other agents authorised in the coating of fruit. This aqueous composition may or may not be strengthened with food grade antioxidants to improve the properties of the physiological disorders control, and may be combined with fungicides for rot control.

This invention is beneficial to improve and extend the post-harvest life of other crops, such as stone fruits, for example, plums, peaches, nectarines or kiwis, avocados, which are also known as alligator pears, among other crops, by controlling the physiological or physical disorders specific for each crop which arise during postharvest processes.

### Detailed description

The present invention describes the method for treating and controlling physiological disorders that are caused during the post-harvest process of fruit, whether pome, stone or tropical fruits, among others, which comprises the application of a dilution of an aqueous solution comprising at least one phospholipid, or at least one polysorbate, or at least a sorbitan ester, or at least a sucrose ester of fatty acids or at least a sucroglyceride of fatty acids or a combination thereof, the application being during any one of the stages of the fruit handling, preparation and transport process.

In the context of the present application, the method described in the present document comprises applying an aqueous formulation which is also referred to as coating. Due to their components, said aqueous formulation of the invention is an edible coating, which is a great valuable property of the aqueous formulation and makes the difference with other type of coatings usually used in the agriculture industry like waxes.

The present document proposes a method that comprises applying an aqueous solution that acts by producing internal atmospheres in the fruit, delaying the decomposition and, therefore, the ageing of the tissues, and scald. In a preferred embodiment, the coating described in the present document comprises at least one phospholipid, preferably lecithin. Moreover, in a preferred embodiment, the aqueous formulation applied comprises compounds of the family of sucrose esters of fatty acids or sucroglycerides, or other agents authorised for use in the coating of fruits in different legislations, such as Cfr21 of the United States FDA, the United States GRAS legislation or the European Union Regulation 1338/2008. These treatments may or may not be strengthened with food grade antioxidants to improve the properties of the scald control. In this regard, a preferred embodiment of the method, object of the invention further comprises applying at least one chemical-type anti-scald compound, such as diphenylamine, ethoxyquin, butylated hydroxytoluene (BHT), butylated hydroxyanisole (BHA), tert-butylhydroquinone (TBHQ), among others. In other embodiments, these anti-scald compounds may be mixed with the coating, forming part of the aqueous formulation, such that as well as the beneficial effect of the same in controlling physiological disorders.

Due to the long preservation period of fruit, it may be affected by fungal or bacterial infections. In these cases, a preferred embodiment of the method object of the invention further comprises applying at least one fungicide agent that is selected from the group consisting of imazalil, tiabendazole, pyrimethanil, fludioxonil, benzimidazoles, imidazoles, strobilurins, phthalimides, iprodione, vinclozolins, carboximides and a combination of the above. In other preferred embodiment, the fungicide agent is a fungistatic food additive, such as those derived from sorbic acid, such as potassium sorbate, sodium sorbate, calcium sorbate, sorbic acid. Benzoates, carbonates and bicarbonates, among others, are also non-limiting examples of antifungal agents. Additionally, in further embodiments, the antigungal agent is a natural extract or active ingredient of natural extracts, such as, cinnamon, clove, citrus, mint and eucalyptus extracts, citronella, eugenol, cinnamaldehyde, and thymol, among others, or combinations of the above.

In a preferred embodiment, the method object of the invention comprises applying at least one antifungal agent as it is described above, but additionally, in other embodiments, these antifungal agents may be mixed with the coating, forming part of the aqueous formulation, such that as well as the beneficial effect of the same in controlling physiological disorders and in extending commercial life, rot is controlled.

In all the embodiments of the present invention, the method described comprises applying the aqueous solution, in combination or mixed with other additional components, via shower, drencher, soaker or fumigation by applicators. Similarly, these coatings may be combined with subsequent applications inside the cold chamber through fumigant containers, cold fumigation, thermo applications, thermofogging, once the previous application of the coating of the invention has been carried out on the fruit when it is put in the cold storage chamber.

Moreover, said formulation may be applied both before the preservation or inside the chamber, combined (in a mixture or separately) with fumigant or aerosol means or another similar type, with fungistatic or natural fungicide products, such as natural extracts or food additives, or basic substances, basic substances being a type of phytosanitary certification consisting of a product that has functions that are different to phytosanitary functions, but that has shown its safety and phytosanitary effectiveness. An example of a basic substance is sodium bicarbonate.

Additionally, a preferred embodiment of the method object of the invention further comprises applying at least one biocide or disinfectant. Furthermore, the method described may comprise applying the aqueous formulation mixed with biocides or disinfectant, wherein the aqueous formulation comprises at least one biocide or disinfectant in its composition thereof.

The invention does not function as an antioxidant per se, although it does have great effectiveness in delaying the appearance of scald and other oxidative damages, thus meaning it enables the fruit to maintain organoleptic characteristics and commercial appearance long enough to complete normal cold storage.

By applying the formula of the invention, the aim of the method described in the present document is to extend the commercial life of the fruits that, depending on each crop, it translates into the reduction of physiological disorders mentioned in the previous section of the present document, such as maintaining the firmness of the fruits, which is also known as penetrometry, reduction in weight loss, delay or reduction of tissue oxidation, or general improvement of the appearance of the fruit.

The method object of the invention, comprises applying the formulation during the period of post harvesting, which comprises all the stages from harvesting the fruit to their sale, such as harvesting, handling, storage , either in controlled atmosphere or in normal atmosphere, processing, packaging, transportation and marketing. In a preferred embodiment, the method object of the invention, in the case of pome fruit, comprises applying the formulation in the preservation phase before changing to Normal Cold from Controlled Atmosphere (CA). Additionally, "Normal cold" is understood as the low-temperature conditions to which the picked fruit is subjected and an atmospheric condition that is found in nature, this is without altering the concentrations of the main elements thereof, which are oxygen and CO₂ that are approximately at a concentration of 21% and 78%, respectively.

After the harvesting process, the fruit may be stored in cold chambers that have specific gas conditions, which are known as controlled atmosphere (CA) chambers. Said gas conditions are characterised in that they have a low oxygen concentration and a high carbon dioxide concentration. Said gas conditions depend on the type of fruit and its variety and are established by approved tables. For example, for the blanquilla pear, these tables recommend an oxygen concentration of 3 to 3.5% and CO₂ concentration of 1.5%. Another example is the golden apple, a fruit for which the controlled atmosphere conditions recommended by said tables would be a concentration of 2% oxygen and 1.5% CO₂.

As examples of gas temperature and concentration ranges, we have the following (Graell, Horticultura 172, October 2003)

**Table 1. Recommended conditions for preserving in controlled atmosphere of the main varieties of apples and pears.**

| | **Until 80 years** | | | | **After 80 years** | | | | |
|---|---|---|---|---|---|---|---|---|---|
| | **T** | **O₂** | **CO₂** | **Period** | **T** | **O₂** | **CO₂** | **Period** | |
| | **(°C)** | **(%)** | **(%)** | **Months** | **(°C)** | **(%)** | **(%)** | **Months** | |
| **Apples** | | | | | | | | | **Main physiological disorders in the chamber** |
| Golden Delicious | 0.5-2 | 3 | 2-4 | 8-9 | 0.5-2 | 1-1.5 | 2-3 | 9 | Shrivelling, common scald |
| Starking Delicious | 1 | 3 | 2-4 | 7-9 | 0 | 1.5 -2 | 1.8-2.2 | 7-8 | Powdery, common scald |
| Belleza de Roma | 1-3 | 3 | 1-2 | 7-8 | 0 | 1-2 | 2-3 | 6-8 | Common scald |
| Granny Smith | 0-2 | 3 | 2-3 | 8-9 | 0-2 | 0.8-1.2 | 0.8-1 | 8 | Common scald, internal browning |
| Gala | 0-1 | - | - | 4-5 | 1-2 | 1.5 -2 | 2 | 5-6 | Core fush, internal browning |
| Jonagold | 2-3 | 3 | 2-3 | 6 | 1-2 | 1.5 -2 | 1.5-2 | 6-8 | Internal browning, senescent scald |
| Reineta | 2-4 | 3 | 2-3 | 3-6 | 0-0.5 | 2-3 | 2-3 | 7 | Shrivelling, common scald |
| Fuji | - | - | - | - | 0-1 | 2-2.5 | 1-2 | 8 | Internal browning, watercore |
| Eistar | 0-1.5 | 2 | 1 | 5-6 | 1-2 | 1.5 | 1-2 | 6-7 | Internal browning |

| **Pears** | | | | | | | | | |
|---|---|---|---|---|---|---|---|---|---|
| Blanquilla | - 0.5/+0 .5 | 3-4 | 3-5 | 7-9 | -0.5 | 2.5 | 1.5-2 | 8-9 | Mechanical scald, internal browning |
| Conferencia | - | 3-4 | 1-2 | 6-8 | 1/0 | 2 | <2 | 7-8 | Brown core, internal breakdown |
| | 0.5/+0 .5 | | | | | | | | |
| Buena Luisa | - | 3 | 3 | 4 | - | 2 | 2 | 7 | Brown core, internal breakdown |
| | 0.5/+0 .5 | | | | 0.5/ 0 | | | | |
| Passa Crassana | 0/0.5 | 3 | 5 | 7-8 | 0/0. | 3 | 5 | 7-8 | Internal browning |
| Doyenne du Comice Limonera | 0 | 3 | 5 | 4-6 | - | 2-3 | 2-3 | 5-6 | Internal browning Mechanical scald, senescent browning |
| | -1/0 | 15 | 5 | 2 | 0.5/ 0-0.5/ 0 | 3 | 3 | 2 | |
| General Leclerc Williams | 0/0.5 | 3 | 5 | 3-4 | 0 | 2-3 | 2-3 | 5-6 | Internal browning, strange flavours Senescent scald |
| | 0 | 3 | 5 | 4-5 | -1/0 | 1-2 | 2-3 | 4-5 | |

In another preferred embodiment, the application of the aqueous formulation, object of the present invention, may be applied at the end of the cold storage process and before the fruit handling, preparation and transport.

In another preferred embodiment, the application of the aqueous formulation, object of the present invention, may be applied in the factory immediately after the harvest, or in the preparation line before the handling and/or sale and/or transport thereof.

Furthermore, in the context of the present application, "post-harvest physiological disorders" is understood as all the damages caused in the fruit by physiological scald, friction scald, oxidation (browing), weight loss, softening, and ageing during the post-harvest process.

In application preferred embodiment, the method of post-harvest treatment is understood as the treatment that comprises applying a dilution of the aqueous solution and the beneficial effect of which is the treatment and control of physiological disorders that are caused in the post-harvest process as well as the treatment and delay of ageing or ripening of the fruit.

In one embodiment of the invention, the method, object of the invention, comprises applying on the fruit to be treated an effective concentration of the aqueous formulation described in the present application.

In one embodiment of the present invention, when the aim is to preserve fruits, delaying the appearance of scald and enabling the fruit to maintain better conditions, an application is carried out before the fruit is put into the cold chamber, both in normal cold and controlled atmosphere.

In a preferred embodiment, the method object of the invention comprises applying the aqueous formulation diluted in water in a concentration comprised in the range between 0.1% to 10% (v/v). More preferably, the concentration of the diluted aqueous formulation is in a concentration comprised in the range between 0.1% and 5% (v/v). In an even more preferred embodiment, the aqueous formulation is diluted in a concentration comprised in the range between 0.1% and 2% (v/v).

In another preferred embodiment of the present invention, when the application of the aqueous formulation, object of the invention, is carried out on pome fruit after changing from preservation in controlled atmosphere to normal atmosphere, or after picking, when the fruit is produced directly in the preparation line, or when the fruit is sent to the final destination, o when it is a combination of some of the post-harvest steps mentioned above, the method comprises applying the aqueous formulation diluted in water in a concentration comprised in the range between 0.1% to 1% (v/v). More preferably, the concentration of the diluted aqueous formulation is in a concentration comprised in the range between 0.15% and 0.5% (v/v). In an even more preferred embodiment, the aqueous formulation is diluted in a concentration comprised in the range between 0.2% and 0.4% (v/v).

When the formulation, object of the invention, is applied to other types of fruit, such as stone fruit or tropical fruits, such as plums, avocados or kiwis for example, the method comprises applying the aqueous formulation diluted in water in a concentration comprised between 1% and 10% (v/v). More preferably, the concentration of the diluted aqueous formulation is in a concentration comprised in the range between 1% and 5% (v/v). In an even more preferred embodiment, this concentration is comprised between 2% and 5% (v/v). In these cases, the application of the formulation may be carried out before the fruit is put in the cold chamber, or before the sale thereof, or before it is shipped to the final destination, both in normal cold and controlled atmosphere conditions, to improve the condition of the fruit, maintaining the firmness, reducing the weight loss and preventing browning of the skin or flesh or dehydration of the fruits.

The dilution of the aqueous formulation that is applied in the method, object of the invention, may be formulated as a liquid, including aerosols. In a preferred embodiment of the method, object of the invention, the diluted aqueous formulation in liquid form is applied in one of the following systems: drencher, also known in the art as soakers, basin, un loader or preparation water lines.

In another preferred embodiment of the method, object of the invention, the dilution of the aqueous formulation is in aerosol form and is applied on the fruit via one of the following systems: spray, pulverisation or fumigation.

The method, object of the invention, may be combined with the treatments commonly used in post-harvesting such as anti-scald and/or antifungal treatments derived from food additives and natural extracts. Additionally, the treatment method may comprise applying the diluted aqueous formulation strengthened with antioxidants, adding them to the aqueous formulation before it is diluted, or mixing the antioxidants directly with the diluted aqueous formulation.

The anti-scald treatments that may be combined with the method, object of the invention, are based on the application of chemical-type anti-scalds, such as diphenylamine, ethoxyquin, butylated hydroxytoluene (BHT), butylated hydroxyanisole (BHA), tert-butylhydroquinone (TBHQ), among others.

Likewise, the antifungal treatments that may be combined with the method, object of the invention, are based on the application of the following fungicide agents that are selected from the group consisting of imazalil, tiabendazole, pyrimethanil, fludioxonil, benzimidazoles, imidazoles, strobilurins, phthalimides, iprodione, vinclozolins, carboximides and a combination of the above. Similarly, said fungicide treatments may be based on the application of antifungals made from fungistatic food additives, such as those derived from sorbic acid, such as potassium sorbate, sodium sorbate, calcium sorbate or sorbic acid. Benzoates, carbonates or bicarbonates, among others, are also non-limiting examples of antifungal agents. Additionally, these antifungal treatments may be based on the application of natural extracts or active ingredients of natural extracts, such as, cinnamon, clove, citrus, mint and eucalyptus extracts, citronella, eugenol, cinnamaldehyde, and thymol, among others, or combinations of the above.

An aqueous formulation comprising at least at least one phospholipid, or at least one polysorbate, or at least a sorbitan ester, or at least a sucrose ester of fatty acids or at least a sucroglyceride of fatty acids or a combination thereof is also an object of the present invention. The aqueous formulation may additionally comprise other compounds that improve the physical-chemical characteristics of said aqueous formulation.

Additionally, an object of the present invention is a dilution of the aqueous formulation wherein said formulation is diluted in water at a concentration comprised between 0.1% to 10% (v/v).

Preferably, the aqueous formulation is applied in post-harvest processes on pome fruit and other crops for treating and controlling physiological disorders that are caused during said post-harvest processes as described in the present document. After the fruit are treated with the aqueous formulation described, surprising results are obtained as may be seen in examples 1, 2 and 3 of the present document.

The present formulation comprises at least one phospholipid, or at least one polysorbate, or at least a sorbitan ester, or at least a sucrose ester of fatty acids or at least a sucroglyceride of fatty acids or a combination thereof, and water, being the sum of all the amounts of the components equal to 100%.

Furthermore, in a preferred embodiment, the formulation object of the invention, may comprise other additives that improve the physical-chemical characteristics of said formulation, it being understood that the sum of the amounts of all the components that form part of the aqueous formulation is always 100%. That is to say, the fact that the total composition of the formulation is completed with water up to 100% does not mean that the incorporation of additives to those considered essential is excluded.

As a result of the method described in the present application, surprising results have been noted in plums since the commercial life is increased, controlling dehydration and improving the appearance after long periods of preservation as shown in example 4 of the present document.

In the case of avocados, the application of the formulation, object of the invention, has reduced weight loss, improved internal and external appearance, and has also considerably increased commercial life, as described in example 5.

In the case of applications of the aqueous formulation on kiwis, great effectiveness is shown in maintaining the firmness and controlling weight loss, as described in example 6.

In a preferred embodiment, the aqueous formulation object of the invention may comprise a phospholipid or a mixture of phospholipids, at least one emulsifier suited to the Hydrophilic-Lipophilic Balance (HLB) of the phospholipid, at least one preservative and at least one defoamer.

In a preferred embodiment, the aqueous formulation may further comprise a coating or film-forming agent.

In the context of the present application, the Hydrophilic-Lipophilic Balance is a quantitative characteristic of a surfactant that quantifies the balance between the hydrophilic portion and the lipophilic portion of said surfactant. In turn, this balance indicates the solubility of the surfactant in water. Taking into account the fact that the aqueous formulation may comprise a phospholipid as an active ingredient and, in turn, it may be combined with film-forming components and other additives, it is essential that the emulsifier used when preparing the formulation, object of the invention, be suitable for obtaining the HLB required to emulsify the phospholipid that is slightly soluble in water.

The formulation, object of the invention, when comprises one or several phospholipids as an active ingredient. A non-limiting example of a phospholipid that the formulation, object of the invention, may comprise is phosphatidylcholine, more commonly known as lecithin, and may be of animal or plant origin. In a preferred embodiment, the lecithin of plant origin may be sunflower or soy lecithin, sunflower lecithin, which is less allergenic, being even more preferred, although there are other plant sources such as cotton, maize, rapeseed, among others. In another preferred embodiment, the lecithin may be of animal origin, lecithin originating from egg yolk being even more preferred, although it may have other animal origins such as milk.

In the scope of the present application, phospholipids have the following beneficial effects:
- Forming part of the cell wall and may contribute to cell regeneration and the resulting tissue renovation
- Reinforcing the cohesion of the skin cells, making the skin of the fruit more sensitive
- Maintaining the elasticity of the tissues, favouring their hydration and therefore delaying their ageing, thanks to the phosphorus and vitamin A and E content thereof
- Contributing to the effects of the antioxidants, since by reinforcing the phospholipid reserve of the coating of the cell wall, the tissues are preserved and more resistant to oxidation.
- Reducing dehydration of the tissues and protects them from damage due to friction.

In one embodiment of the invention, the formulation, object of the invention, may comprise a composition in ratio w/w:

**Table 2. An embodiment of the formulation of the present invention.**

| | |
|---|---|
| Phospholipid | 1-30% |
| Polysorbate | 0.1-20% |
| Sorbitan esters | 0.1-20% |
| Sucrose ester of fatty acids | 0-20% |
| Sucrose glycerids of fatty acids | 0-20% |
| Glycol | 0-30% |
| Alcohol | 0-20% |
| Defoamer | 0-0.4% |
| Water | qs |

In the scope of the present invention, the amount of water that the formulation, object of the invention, comprises is the necessary amount in order for the sum of the quantities of the components to be equal to 100% (w/w).

Furthermore, the amount of defoamer is determined by the amount of foam that is produced during the preparation of the formulation, object of the invention, said amount of defoamer being comprised in a range of 0-0.4%, and in a preferred embodiment, in an amount comprised between 0.1 to 0.2%.

The polysorbates are non-ionic surfactants derived from sorbitan, which act via esterification and ethoxylation reactions with fatty acids and the non-ionic surfactant made up of sorbitan esters. The presence of polysorbate, the sorbitan ester or their combination in the formulation, object of the invention, must result in the HLB suitable for the emulsion of the substance required in the formulation. Both surfactant families are considered food additives. Therefore, in the present invention, the combination of polysorbates and sorbitan esters present in the formulation, object of the invention, must be in a suitable proportion with the HLB with the phospholipids that are used in each embodiment of said formulation.

In the context of the present invention, the sucrose esters of fatty acids and the sucroseglycerids of fatty acids are film formers, that due to its lipidic nature, said components can be used as edible coatings, regulating the gas exchanging so can help to delay aging by means of the reduction of respiration through the skin of the fruit, and helping to avoid the losses of water which lead to weight loss control.

In a preferred embodiment, when the formulation, object of the invention, comprises at least one of said film formers, the sucrose ester of fatty acids or the sucroglyceride of fatty acids or the combination thereof are comprised in an amount between 0.1 to 20 % (w/w). In a more preferred embodiment, the sucrose ester of fatty acids or the sucroglyceride of fatty acid or the combination thereof are comprised in an amount between 3 to 10 % (w/w)
In other preferred embodiment, the formulation may comprise an additive which is at least a cellulose derivate, which is another film former. In the context of the present invention, this cellulose derivate may be comprised in the formulation in combination with the sucrose ester of fatty acids or the sucroglyceride of fatty acids or the combination thereof. In other preferred embodiment, said cellulose derivate may be comprised in the formulation alone. In both cases, the at least one cellulose derivate is comprised in the formulation in an amount between 0 to 20 % (w/w), and in a more preferred embodiment, said cellulose derivate is comprised in an amount between 2 to 5 % (w/w). Said cellulose derivate, that may be comprised in the present formulation, is selected from the group consisting of methylcellulose, ethylcellulose, hydroxyethylmethylcellulose, hydroxypropyl cellulose, carboxymethylcellulose, or a polymer of said cellulose derivate and a combination thereof, wherein the polymers mentioned in this group of compounds are the polymers of said cellulose derivate.

In a preferred embodiment of the invention, the formulation, object of the invention, may comprise lecithin as a phospholipid, the formulation having the composition in proportion w/w as stated below:

**Table 3. An embodiment of the formulation of the present invention.**

| | |
|---|---|
| Lecithin | 1-30% |
| Polysorbate | 0.1-20% |
| Sorbitan esters | 0.1-20% |
| Sucrose ester of fatty acids | 0-20% |
| Sucrose glycerids of fatty acids | 0-20% |
| Glycol | 0-30% |
| Alcohol | 0-20% |
| Defoamer | 0-0.4% |
| Water | qs |

In other preferred embodiment, the aqueous formulation, object of the invention, which is referred to as formulation 1, may comprise the following formulation w/w:

**Table 4. Preferred embodiment of the present invention and which in the present application is known as formulation 1.**

| | |
|---|---|
| Soy lecithin | 10% |
| Polysorbate 80 | 4% |
| Sorbitan ester 80 | 0.5% |
| Water | qs |

In a particular embodiment, the soy lecithin may be substituted for sunflower lecithin, or any other phospholipid with antioxidant or cell wall-forming function. On this basis, a particular embodiment of said aqueous formulation with Sunflower Lecithin, which is referred to as formulation 2, may comprise the following composition w/w:

**Table 5. Preferred embodiment of the present invention and which in the present application is known as formulation 2.**

| | |
|---|---|
| Sunflower lecithin | 5% |
| Polysorbate 80 | 4% |
| Sorbitan ester 80 | 0.5% |
| Water | qs |

Said aqueous formulations may comprise two types of lecithin described above which are Sunflower lecithin and soy lecithin. Both lecithins are used interchangeably to different embodiments of the aqueous formulation, the difference between the two being exclusively the texture thereof.

As has been noted with the combination of polysorbates and sorbitan esters present in the formulation, object of the invention, they must be in a suitable proportion with the HLB of the lecithin.

In a preferred embodiment, the aqueous formulation of the present application may comprise at least one glycol. The glycols act as a plasticizer in the present invention. The glycol may be selected from the group consisting of glycerin, propylene glycol, dipropylene glycol or a combination of the above.

In another preferred embodiment, the aqueous formulation is applied on pome fruits, kiwi, avocado, and stone fruits, among other crops, the formulation has another type of film former, such as sucrose esters of fatty acids, sucrose glycerides or celluloses, which is referred to as formulation 3, resulting in the following formulation:

**Table 6. Preferred embodiment of the present invention and which in the present application is known as formulation 3.**

| | |
|---|---|
| Sucrose esters or sucrose glycerides or cellulose derivatives or combination thereof. | 3% |
| Glycol | 3% |
| Lecithin | 16% |
| Polysorbate | 8% |
| Sorbitan | 2% |
| Water | qs |

Additionally, a more preferred embodiment, the aqueous formulation is applied on melon, among other crops, which is referred to as formulation 4, ,resulting in the following formulation:

**Table 7. Preferred embodiment of the present invention and which in the present application is known as formulation 4.**

| | |
|---|---|
| Sucrose esters of fatty acids | 0.05% |
| Cellulose derivate | 0.02% |
| Glycol | 0.05% |
| Alcohol | 0.05% |
| Glucose polymer | 0.03% |
| Potassium sorbate (preservative | 0.01% |
| Defoamer | 0.02% |
| Water | qs |

Likewise, the aqueous formulation, object of the invention, may also comprise antioxidants, anti-scald agents, antifungal agents or a combination of the above.

The antioxidant agents that may comprise the aqueous formulation may in turn be of natural origin or chemical origin. The purpose of adding an antioxidant agent to the aqueous formulation is to combine the protective action of the aqueous formulation with the action of the antioxidant agent, promoting the synergistic protective action of said formulation, also delaying the senescence of the fruit. In this aspect, suitable but non-limiting examples of antioxidant agents of natural origin that may be comprised in the aqueous formulation are citric acid, ascorbic acid, butylated hydroxyanisole (BHA), butylated hydroxytoluene (BHT), tert-butylhydroquinone (TBHQ), lactic acids, citric acids, tartrates, propyl gallates, 6-O-Palmitoylascorbic acid, food additives or a combination of the above. Additionally, non-limiting examples of antioxidant agents of chemical origin that may comprise the aqueous formulation are diphenylamine, methyldiphenylamine, ethoxyquin or a combination of the above.

As stated before, the formulation, object of the invention, may also comprise chemical anti-scald agents in the composition thereof. In this aspect, the aqueous formulation may comprise chemical anti-scald agents that have been described above in the present application.

Moreover, the aqueous formulation, object of the invention, may comprise the fungicides that have been described above in the present application.

The aim of all the aforementioned combinations is to obtain a synergistic effect in the reduction of physiological disorders and, preferably, scalds and, in addition, depending on the type of crop, in the case of the combination of the aqueous formulation with fungicide substances, in order to obtain an additional antifungal effect in the aqueous formulation described in the present application.

Taking into consideration what is described in the present document, the method and the aqueous formulation, object of the invention, enable the reduction of the occurrence of:
1.- Physiological scald during preservation
2.- Physiological scald caused by ending Controlled Atmosphere (CA) preservation and changing to Normal Cold.
3.- Physiological scald caused by lengthening the preservation to periods of time longer than the recommended for the variety concerned in normal cold.
4.- Physiological scald during transport.
4.- Physiological scald due to senescence.
6.- Friction scald during the handling, preparation and transport processes, this being after a preservation process.
7.- Over-ripening or loss of organoleptic properties.

### Brief description of the Figures

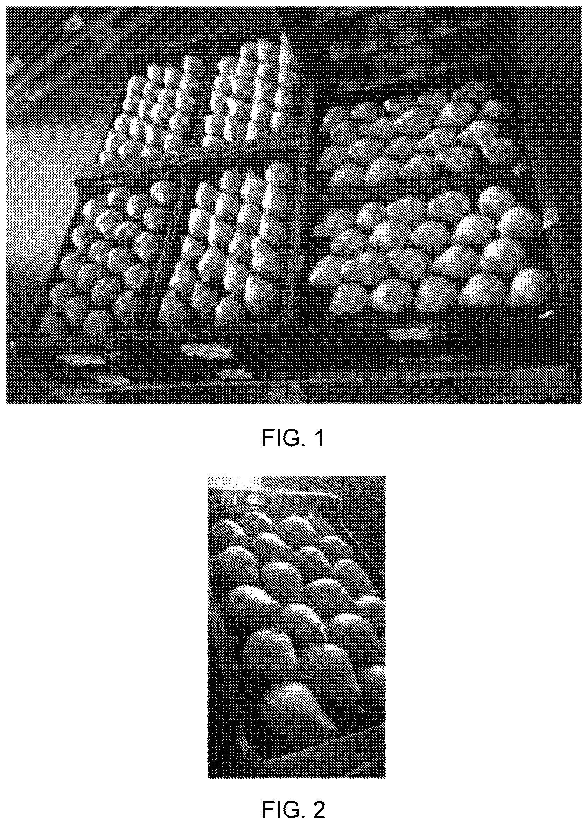

Figure 1. Fruit after the application of the treatment, before preparation, and after changing from Controlled Atmosphere (CA) to Normal Atmosphere (NA) and removed from the NA chamber. The fruits have a healthy appearance and no physiological scald symptoms when removed from NA.
Figure 2. Detailed photograph of the fruit after being removed from Normal Atmosphere.

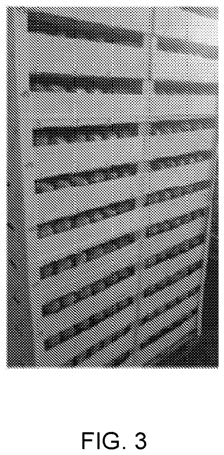

Figure 3. Photograph of fruit batch after preparation for sale. Rejection due to friction scald is practically inexistent, showing the effectiveness of the treatment, object of the invention. Likewise, the fruit is shiny and healthy which makes it very marketable.

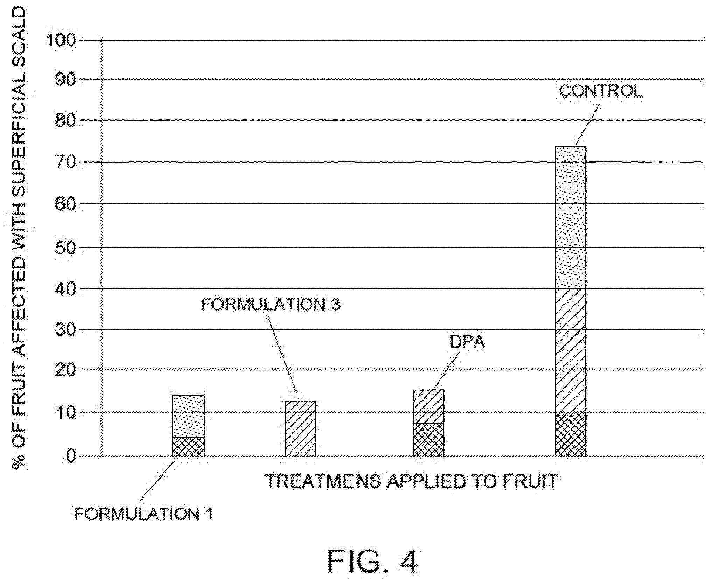

Figure 4. Representation of the results of the study on the effectiveness of the method, object of the invention, as described in example 1 of the present document. This shaded bars graph represents the percentage of fruit affected with superficial scald after 6 months of preservation of the fruit in CA, at a temperature of 0°C and 95% RH. Each bar represents a different preservation treatment. Additionally, each shade of the bars represents the following information: The dot shade corresponds to fruit with >12,50 % of its surface affected with scald. The oblique lines shade, corresponds to fruit with <=12,50 % of its surface affected with scald, and finally, The oblique square shade, corresponds to fruit with incipient scald on its surface.

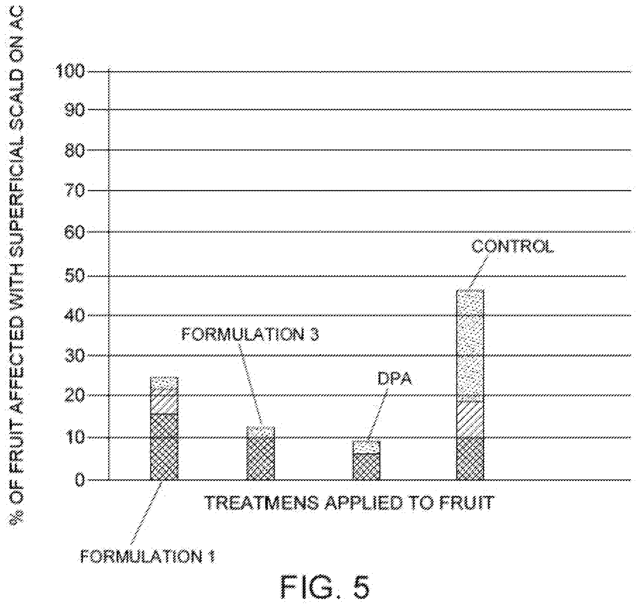

Figure 5. Representation of the results of the study on the effectiveness of the method, object of the invention, as described in example 1 of the present document. This shaded bars graph represents the percentage of fruit affected with superficial scald after 6 months of preservation of the fruit in CA, at a temperature of 0°C and 95% RH. Each bar represents a different preservation treatment. Additionally, each shade of the bars represents the following information: The dot shade corresponds to fruit with >12,50 % of its surface affected with scald. The oblique lines shade, corresponds to fruit with <=12,50 % of its surface affected with scald, and finally, The oblique square shade, corresponds to fruit with incipient scald on its surface.

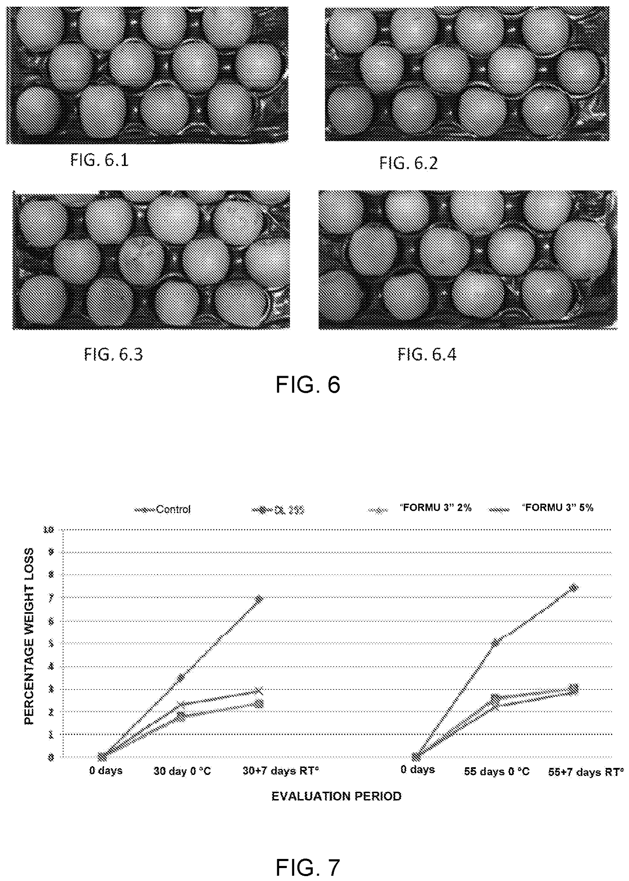

Figure 6. Representation of the results of the study on the effectiveness of the method, object of the invention, as described in example 1 of the present document. Figure 6.1 shows the appearance of the fruit 6 months after the treatment thereof with "Formulation 3". Figure 6.2 shows the appearance of the fruit 6 months after the treatment thereof with "Formulation 3". Figure 6.3 shows the appearance of the fruit 6 months after not having been subjected to any preservation treatment. Figure 6.4 shows the appearance of the fruit 6 months after the treatment thereof with DPA.
Figure 7. Representation of the results of the study on the effectiveness of the method, object of the invention, as described in example 4 of the present document. This graph shows the results of weight loss in fruits after a preservation period. The weight loss in plums was assessed in two groups of fruits subjected to different physical conditions. The weight loss of the first group of fruits was assessed after 30 days of preservation at 0°C and after the subsequent 7 days subjected to room temperature (RT°). The weight loss of the second group of fruits was assessed after 55 days of preservation at 0°C and after the subsequent 7 days subjected to room temperature (RT°).

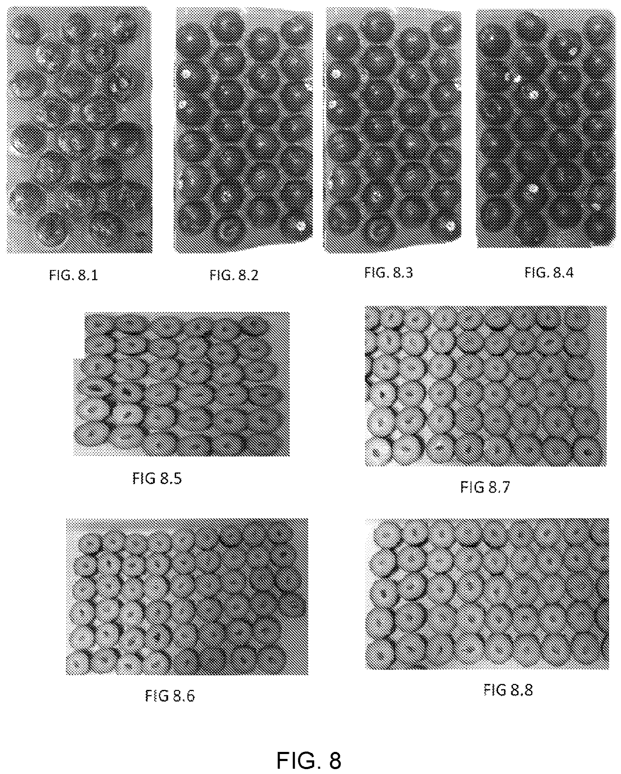

Figure 8. Representation of the results of the study on the effectiveness of the method, object of the invention, as described in example 4 of the present document. Image of fruits that were assessed after 30 days of being preserved at 0°C. Figure 8.1 shows the fruits that were not subjected to any preservation treatment. Figure 8.2 shows the fruits that were treated with DL 255. Figure 8.3 shows the fruits that were treated with "Formulation 3" 2%. Figure 8.4 shows the fruits that were treated with "Formulation 3" 5%. Figure 8.5 shows a transversal cross section of the fruits that were not subjected to any preservation treatment. Figure 8.6 shows a transversal cross section of the fruits that were treated with DL 255. Figure 8.7 shows a transversal cross section of the fruits that were treated with "Formulation 3" 2%. Figure 8.8 shows a transversal cross section of the fruits that were treated with "Formulation 3" 5%.

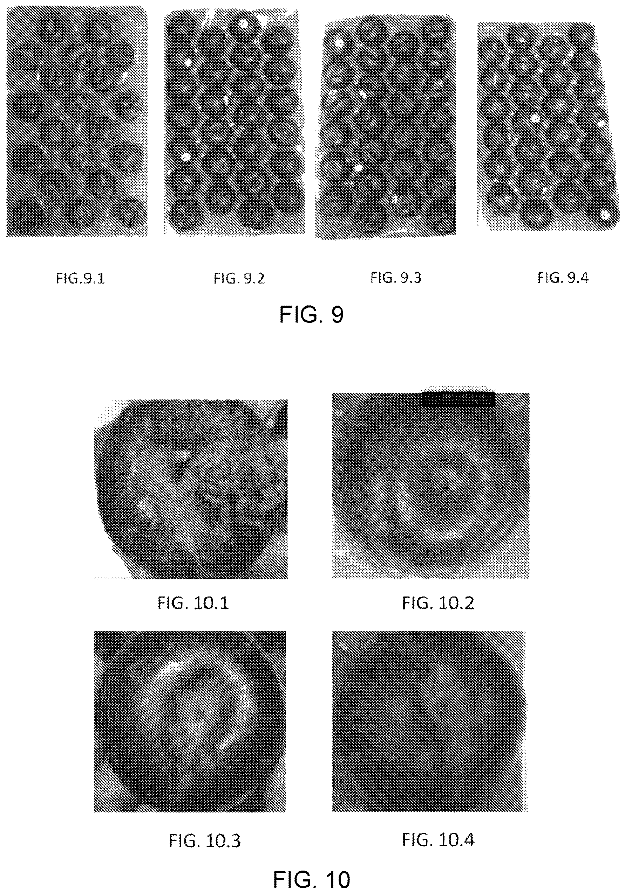

Figure 9. Representation of the results of the study on the effectiveness of the method, object of the invention, as described in example 4 of the present document. Image of the fruits that were first subjected to 30 days at 0°C and were assessed 7 days after, during which time the fruits were stored at room temperature (RT°). Figure 9.1 shows the fruits that were not subjected to any preservation treatment. Figure 9.2 shows the fruits that were treated with DL 255. Figure 9.3 shows the fruits that were treated with "Formulation 3" 2%. Figure 9.4 shows the fruits that were treated with "Formulation 3" 5%.
Figure 10. Representation of the results of the study on the effectiveness of the method, object of the invention, as described in example 4 of the present document. Image of the peduncular area of fruits that were first subjected to 30 days at 0°C and were assessed 7 days after, during which time the fruits were stored at room temperature (RT°). Figure 10.1 shows the fruits that were not subjected to any preservation treatment. Figure 10.2 shows the fruits that were treated with DL 255. Figure 10.3 shows the fruits that were treated with "Formulation 3" 2%. Figure 10.4 shows the fruits that were treated with "Formulation 3" 5%.

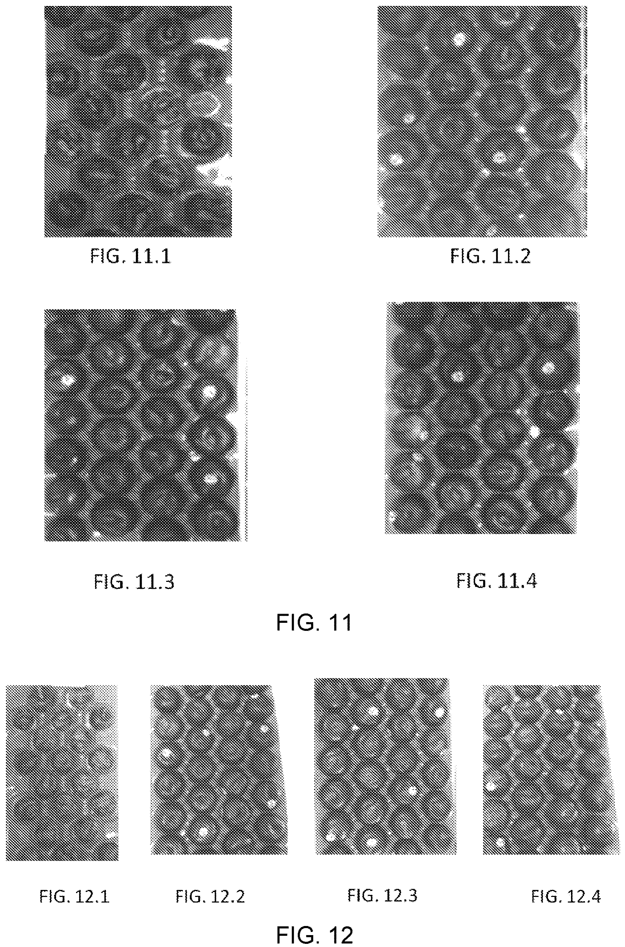

Figure 11. Representation of the results of the study on the effectiveness of the method, object of the invention, as described in example 4 of the present document. Image of the external appearance of fruits that were assessed after 55 days of being preserved at 0°C. Figure 11.1 shows the fruits that were not subjected to any preservation treatment. Figure 11.2 shows the fruits that were treated with DL 255. Figure 11.3 shows the fruits that were treated with "Formulation 3" 2%. Figure 11.4 shows the fruits that were treated with "Formulation 3" 5%.
Figure 12. Representation of the results of the study on the effectiveness of the method, object of the invention, as described in example 4 of the present document. Image of the external appearance of fruits that were first subjected to 55 days at 0°C and were assessed 7 days after, during which time the fruits were stored at room temperature (RT°). Figure 12.1 shows the fruits that were not subjected to any preservation treatment. Figure 12.2 shows the fruits that were treated with DL 255. Figure 12.3 shows the fruits that were treated with "Formulation 3" 2%. Figure 12.4 shows the fruits that were treated with "Formulation 3" 5%.

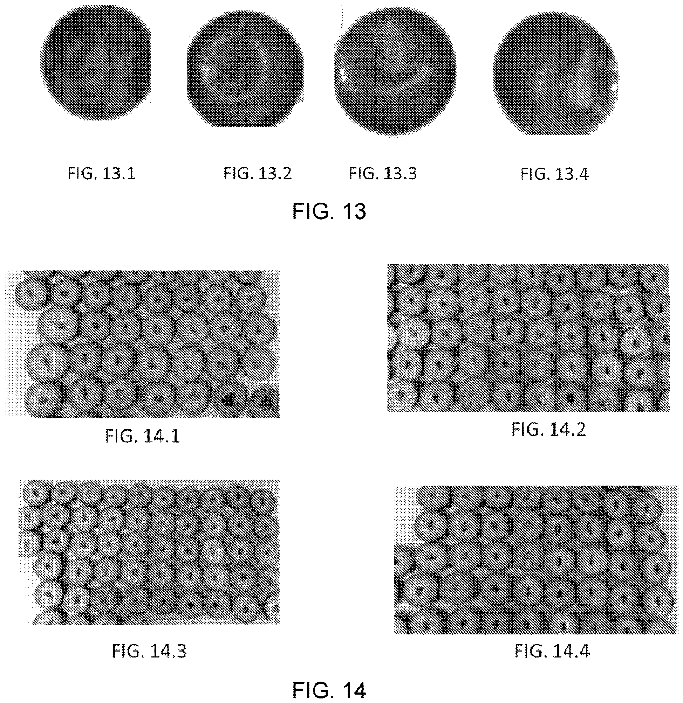

Figure 13. Representation of the results of the study on the effectiveness of the method, object of the invention, as described in example 4 of the present document. Image of the peduncular area of fruits that were first subjected to 55 days at 0°C and were assessed 7 days after, during which time the fruits were stored at room temperature (RT°). Figure 13.1 shows the fruits that were not subjected to any preservation treatment. Figure 13.2 shows the fruits that were treated with DL 255. Figure 13.3 shows the fruits that were treated with "Formulation 3" 2%. Figure 13.4 shows the fruits that were treated with "Formulation 3" 5%.
Figure 14. Representation of the results of the study on the effectiveness of the method, object of the invention, as described in example 4 of the present document. Image of a transversal cross section of the fruits that were first subjected to 55 days at 0°C and were assessed 7 days after, during which time the fruits were stored at room temperature (RT°). Figure 14.1 shows the fruits that were not subjected to any preservation treatment. Figure 14.2 shows the fruits that were treated with DL 255. Figure 14.3 shows the fruits that were treated with "Formulation 3" 2%. Figure 14.4 shows the fruits that were treated with "Formulation 3" 5%.

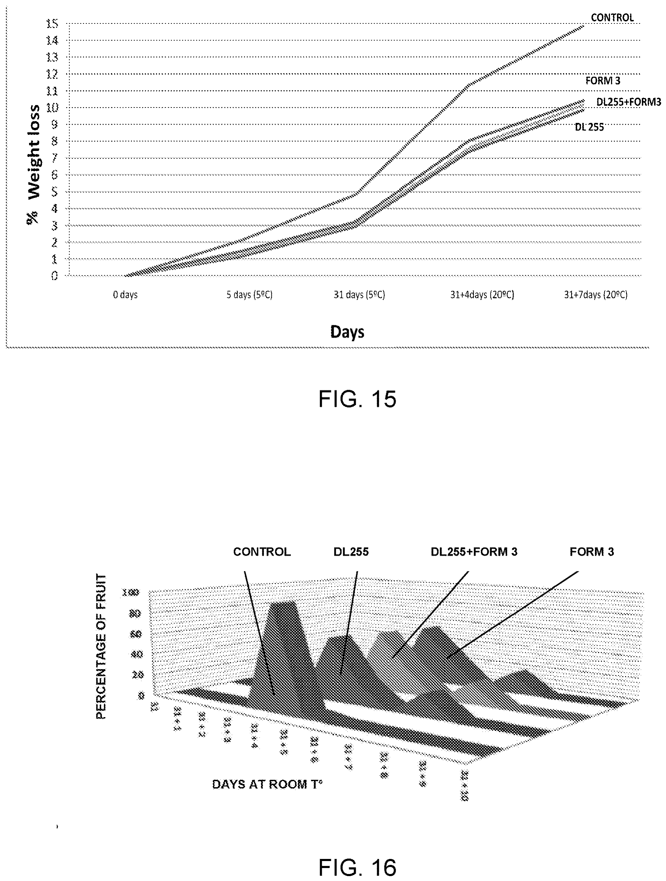

Figure 15. Representation of the results of the study on the effectiveness of the method, object of the invention, as described in example 5 of the present document. This graph shows the results of weight loss in fruits throughout the preservation process: a) 15 days at 5°C, b) 30 days at 5°C, c) 30 days at 5°C and 4 days at 20°C, and d) 30 days at 5°C and 7 days at 20°C.
Figure 16. Representation of the results of the study on the effectiveness of the method, object of the invention, as described in example 5 of the present document. This graph shows the results of the ripeness of the fruits after a preservation period of 31 days at 5°C, and of 1 to 10 days subsequently in which the fruit is store at 20°C.

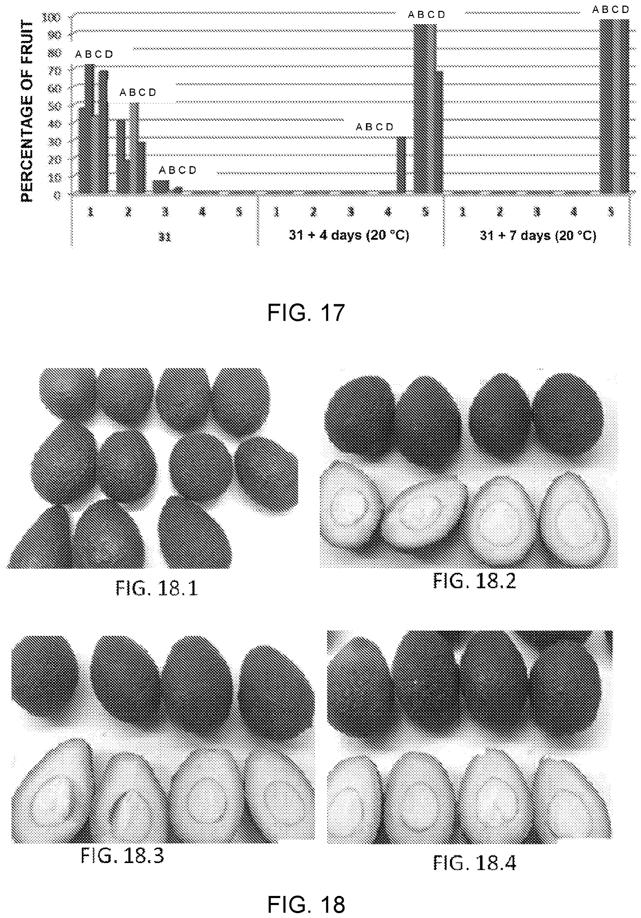

Figure 17. Representation of the results of the study on the effectiveness of the method, object of the invention, as described in example 5 of the present document. This graph shows the results of colour change in fruits after a preservation period. Columns "A" represents the control group, which are fruits that were not subjected to any preservation treatment. Columns "B" represent the fruits that were treated with DL255. Columns "C" represent the fruits that were treated with DL255 and Formulation 3. Columns "D" represent the fruits that were treated with Formulation 3. This graph shows results for preservation periods of 31 days at 5°C, 30 days at 5°C and a preservation period of 4 days at RT°, and 30 days at 5°C and a preservation period of 7 days at RT°.
Figure 18. Representation of the results of the study on the effectiveness of the formulation, object of the invention, as described in example 5 of the present document. Image of a transversal cross section of a group of fruits that were subjected to 31 days at 5°C. Figure 18.1 shows the fruits that were not subjected to any preservation treatment. Figure 18.2 shows the fruits that were treated with DL 255. Figure 18.3 shows the fruits that were treated with DL 255 and "Formulation 3" 2%. Figure 18.4 shows the fruits that were treated with "Formulation 3" 2%.

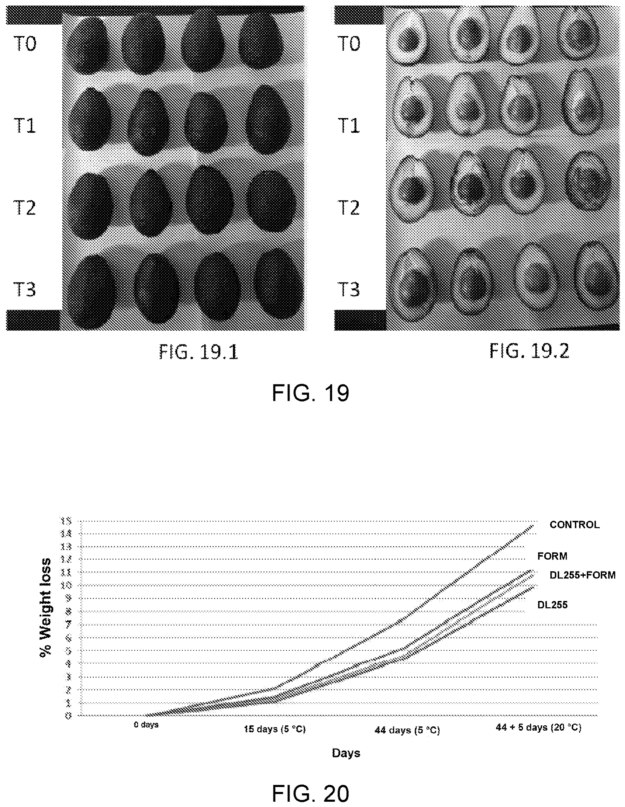

Figure 19. Representation of the results of the study on the effectiveness of the method, object of the invention, as described in example 5 of the present document. Figure 19.1 shows the external appearance of the fruits that were subjected to 31 days at 5°C and 7 days at RT° (SL). Figure 19.2 shows a transversal cross section of the fruits that were submitted to 31 days at 5°C and 7 days at RT° (SL). As may be seen in both images, 19.1 and 19.2, the fruits are divided into 4 groups identified as T0, which are the fruits that have not had any preservation treatment applied to them; T1, which are fruits treated with DL 255; T2, which are fruits treated with DL 255 and "Formulation 3" 2%, and T3, which are fruits treated with "Formulation 3" 2%.
Figure 20. Representation of the results of the study on the effectiveness of the method, object of the invention, as described in example 5 of the present document. This graph shows the results of weight loss in fruits throughout the preservation process: a) 15 days at 5°C, b) 44 days at 5°C, and c) 44 days at 5°C and 5 days at 20°C.

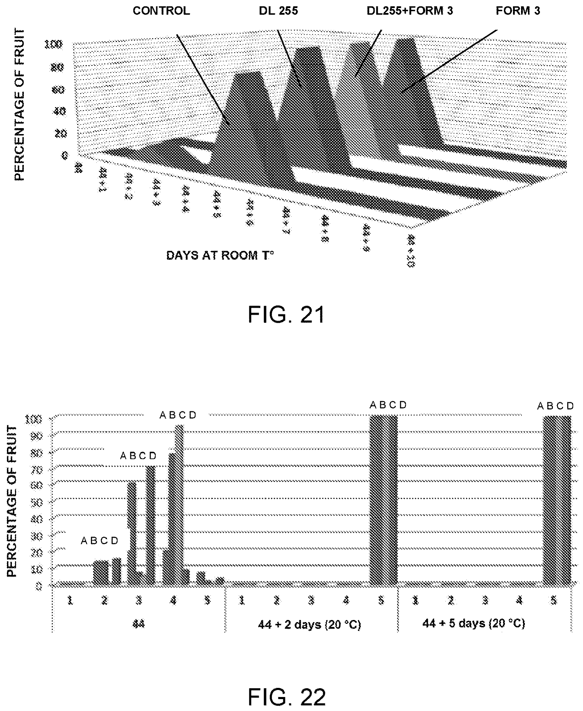

Figure 21. Representation of the results of the study on the effectiveness of the method, object of the invention, as described in example 5 of the present document. This graph shows the results of the ripeness of the fruits after a preservation period of 34 days at 5°C, and of 1 to 10 days afterwards in which the fruit is stored at 20°C.
Figure 22. Representation of the results of the study on the effectiveness of the method, object of the invention, as described in example 5 of the present document. Columns "A" represents the control group, which are fruits that were not subjected to any preservation treatment. Columns "B" represent the fruits that were treated with DL255. Columns "C" represent the fruits that were treated with DL255 and Formulation 3. Columns "D" represent the fruits that were treated with Formulation 3. This graph shows the results of colour variation in fruits that were subjected to different treatments after a preservation period. This graph shows results for preservation periods of 44 days at 5°C, 44 days at 5°C and a preservation period of 2 days at RT°, and 30 days at 5°C and a preservation period of 5 days at RT°.

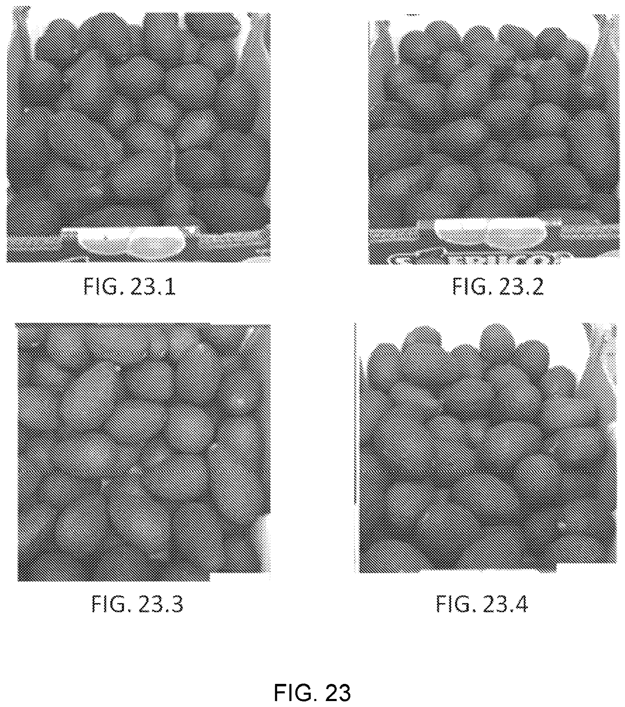

Figure 23. Representation of the results of the study on the effectiveness of the method, object of the invention, as described in example 5 of the present document. Image of the external appearance of a group of fruits that were assessed after 44 days of being preserved at 5°C. Figure 23.1 shows the fruits that were not subjected to any preservation treatment. Figure 23.2 shows the fruits that were treated with DL 255. Figure 23.3 shows the fruits that were treated with DL 255 and "Formulation 3" 2%. Figure 23.4 shows the fruits that were treated with "Formulation 3" 2%.

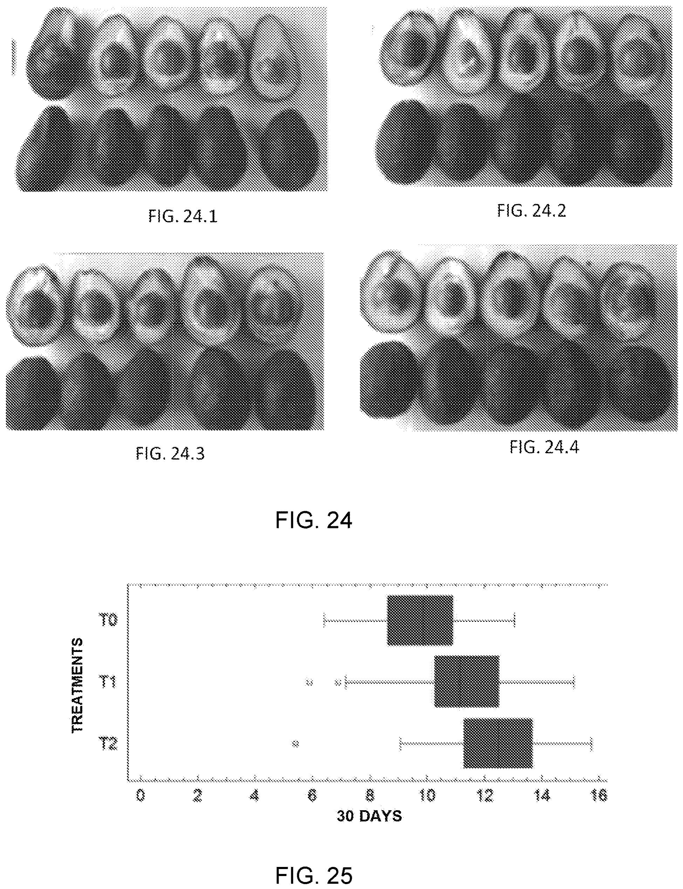

Figure 24. Representation of the results of the study on the effectiveness of the method, object of the invention, as described in example 5 of the present document. Image of the external appearance of a group of fruits that were assessed 44 days after preservation at 5°C and a preservation period of 5 days at RT°. Figure 24.1 shows the fruits that were not subjected to any preservation treatment. Figure 24.2 shows the fruits that were treated with DL 255. Figure 24.3 shows the fruits that were treated with DL 255 and "Formulation 3" 2%. Figure 24.4 shows the fruits that were treated with "Formulation 3" 2%.
Figure 25. Representation of the results of the study on the effectiveness of the method, object of the invention, as described in example 6 of the present document. This graph shows the flesh firmness of three different groups of fruits: T0 are fruits to which preservation treatment has not been applied; T1, which are fruits treated with "Formulation 3" 2%; T2, are fruits treated with "Formulation 3" 5%. Said firmness was assessed after 30 days of storage at 0°C.

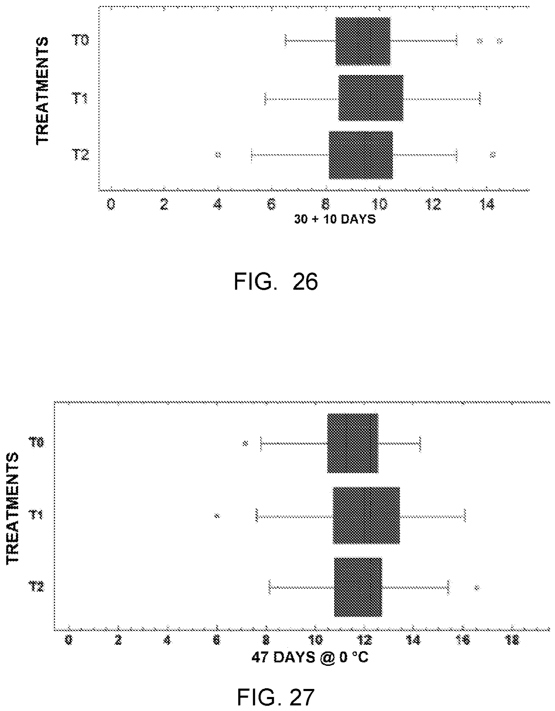

Figure 26. Representation of the results of the study on the effectiveness of the method, object of the invention, as described in example 6 of the present document. This graph shows the flesh firmness of three different groups of fruits: T0 are fruits to which preservation treatment has not been applied; T1, which are fruits treated with "Formulation 3" 2%; T2, are fruits treated with "Formulation 3" 5%. Said firmness was assessed after 30 days of storage at 0°C and after 10 days at RT°.
Figure 27. Representation of the results of the study on the effectiveness of the method, object of the invention, as described in example 6 of the present document. This graph shows the flesh firmness of three different groups of fruits: T0 are fruits to which preservation treatment has not been applied; T1, which are fruits treated with "Formulation 3" 2%; T2, are fruits treated with "Formulation 3" 5%. Said firmness was assessed after 47 days of storage at 0°C.

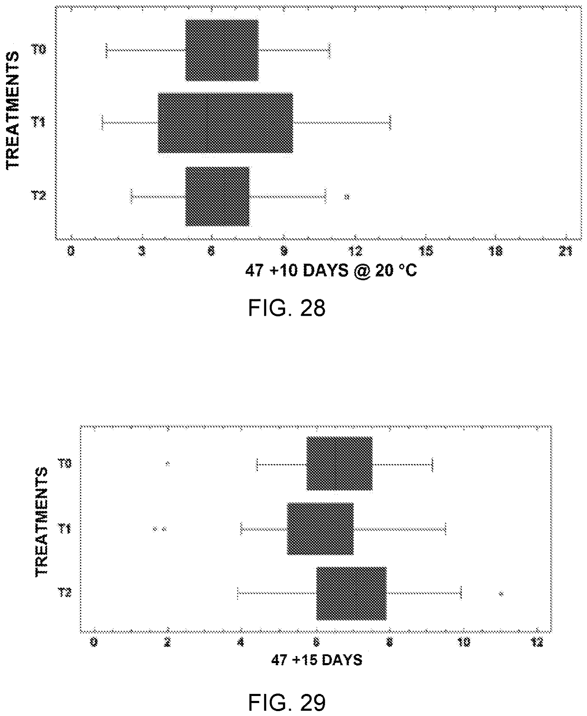

Figure 28. Representation of the results of the study on the effectiveness of the method, object of the invention, as described in example 6 of the present document. This graph shows the flesh firmness of three different groups of fruits: T0 are fruits to which preservation treatment has not been applied; T1, which are fruits treated with "Formulation 3" 2%; T2, are fruits treated with "Formulation 3" 5%. Said firmness was assessed after 47 days of storage at 0°C and after 10 days at RT°.
Figure 29. Representation of the results of the study on the effectiveness of the formulation, object of the invention, as described in example 6 of the present document. This graph shows the flesh firmness of three different groups of fruits: T0 are fruits to which preservation treatment has not been applied; T1, which are fruits treated with "Formulation 3" 2%; T2, are fruits treated with "Formulation 3" 5%. Said firmness was assessed after 47 days of storage at 0°C and after 15 days at RT°.

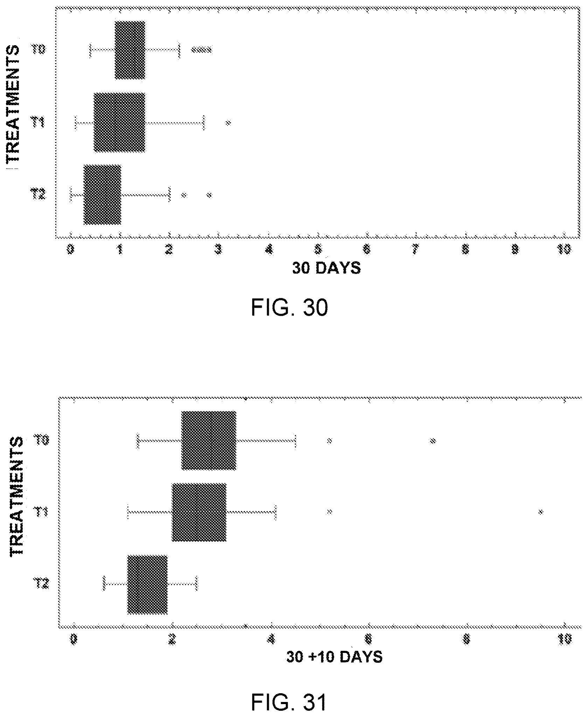

Figure 30. Representation of the results of the study on the effectiveness of the method, object of the invention, as described in example 6 of the present document. This graph shows the weight loss of three different groups of fruits: T0 are fruits to which preservation treatment has not been applied; T1, which are fruits treated with "Formulation 3" 2%; T2, are fruits treated with "Formulation 3" 5%. Said weight loss was assessed after 30 days of storage at 0°C.
Figure 31. Representation of the results of the study on the effectiveness of the method, object of the invention, as described in example 6 of the present document. This graph shows the weight loss of three different groups of fruits: T0 are fruits to which preservation treatment has not been applied; T1, which are fruits treated with "Formulation 3" 2%; T2, are fruits treated with "Formulation 3" 5%. Said weight loss was assessed after 30 days of storage at 0°C and after 10 days at RT°.

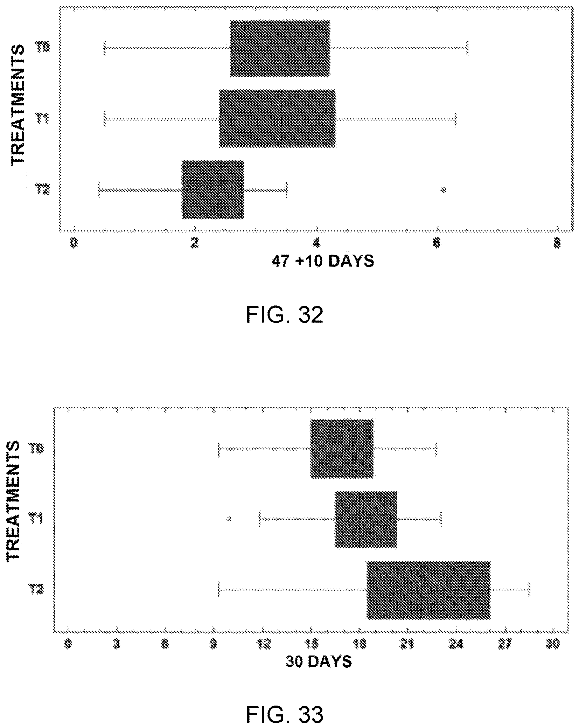

Figure 32. Representation of the results of the study on the effectiveness of the method, object of the invention, as described in example 6 of the present document. This graph shows the weight loss of three different groups of fruits: T0 are fruits to which preservation treatment has not been applied; T1, which are fruits treated with "Formulation 3" 2%; T2, are fruits treated with "Formulation 3" 5%. Said weight loss was assessed after 47 days of storage at 0°C and after 10 days at RT°.
Figure 33. Representation of the results of the study on the effectiveness of the method, object of the invention, as described in example 6 of the present document. This graph shows the firmness of the columella of three different groups of fruits: T0 are fruits to which preservation treatment has not been applied; T1, which are fruits treated with "Formulation 3" 2%; T2, are fruits treated with "Formulation 3" 5%. Said firmness was assessed after 30 days of storage at 0°C.

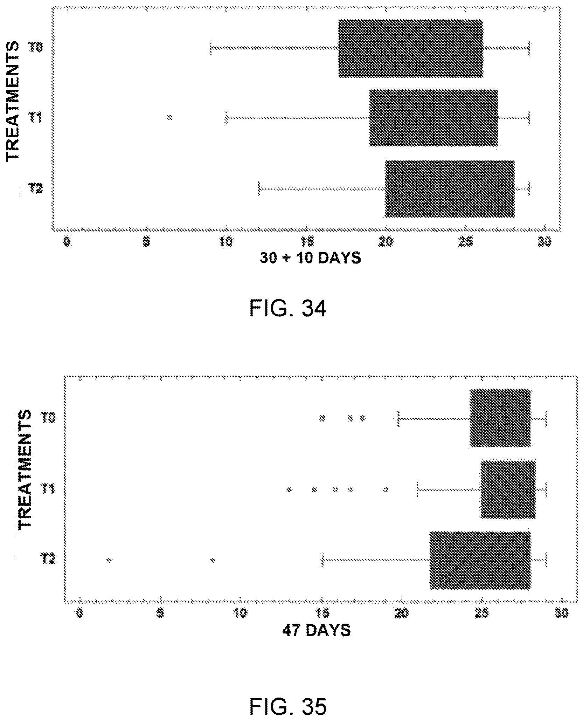

Figure 34. Representation of the results of the study on the effectiveness of the method, object of the invention, as described in example 6 of the present document. This graph shows the firmness of the columella of three different groups of fruits: T0 are fruits to which preservation treatment has not been applied; T1, which are fruits treated with "Formulation 3" 2%; T2, are fruits treated with "Formulation 3" 5%. Said firmness was assessed after 30 days of storage at 0°C and after 10 days at RT°.
Figure 35. Representation of the results of the study on the effectiveness of the method, object of the invention, as described in example 6 of the present document. This graph shows the firmness of the columella of three different groups of fruits: T0 are fruits to which preservation treatment has not been applied; T1, which are fruits treated with "Formulation 3" 2%; T2, are fruits treated with "Formulation 3" 5%. Said firmness was assessed after 47 days of storage at 0°C.

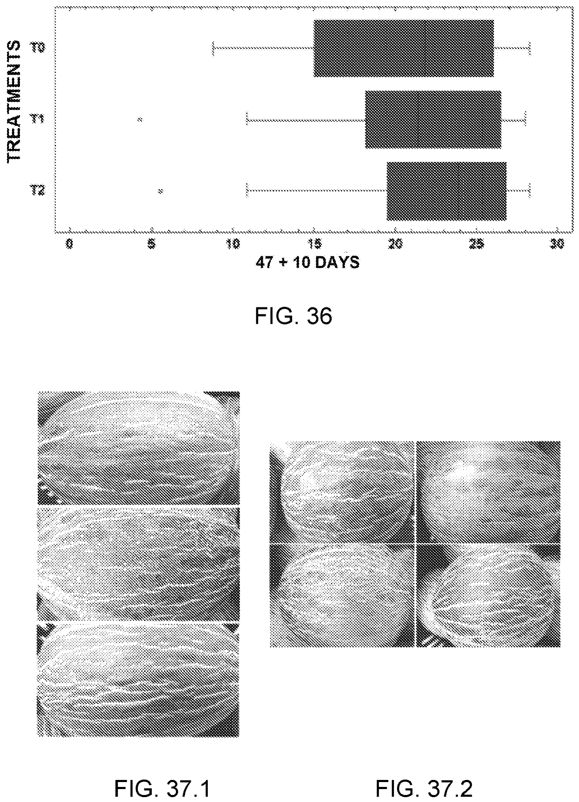

Figure 36. Representation of the results of the study on the effectiveness of the method, object of the invention, as described in example 6 of the present document. This graph shows the firmness of the columella of three different groups of fruits: T0 are fruits to which preservation treatment has not been applied; T1, which are fruits treated with "Formulation 3" 2%; T2, are fruits treated with "Formulation 3" 5%. Said firmness was assessed after 30 days of storage at 0°C and after 10 days at RT°.
Figure 37. Representation of the results of the study on the effectiveness of the method, object of the invention, as described in example 7 of the present document. Image of a longitudinal vision of the fruits that were storage 19 days of storage at 0°C, and 1 day at 10°C and 15 days at 17-18°C. Figure 37.1 shows the fruits that were treated with formulation 4 in combination with further additives. Figure 37.2 shows the fruits that were not treated (Control group).

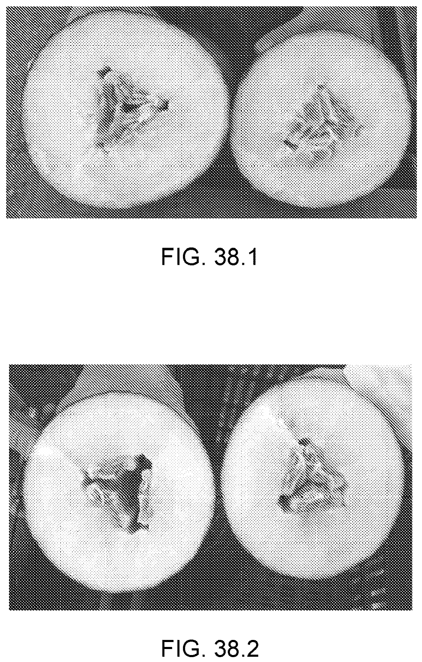

Figure 38. Representation of the results of the study on the effectiveness of the method, object of the invention, as described in example 7 of the present document. Image of a transversal cross section of the fruits that were storage 19 days of storage at 0°C, and 1 day at 10°C and 15 days at 17-18°C. Figure 38.1 shows the fruits that were not treated (Control group). Figure 38.2 shows the fruits that were treated with formulation 4 in combination with further additives.

### Examples

For the purpose of contributing to a better understanding of the invention, and in accordance with a practical embodiment thereof, this description is accompanied by a series of examples constituting an integral part of the same, by way of illustration and never limiting the invention.

### Example 1: Study of the effectiveness of the Formulation 3 in delaying scald in pome fruit.

A study was carried out to evaluate different fruit preservation alternatives, the majority of which were based on the formulation 3 preparation, alone or in combination with different additives, DPA and ethoxyquin to control scald.

The treatments tested were the following:
Formulation 3 diluted to 2% (v/v) was applied by immersing a total of 1800 kg of Granny Smith apples. Said fruits had been picked early and then preserved for 6 months in a Controlled Atmosphere (CA) and Normal Cold (NC). CA and NC, 0.5°C, 90-9% Relative Humidity (RH)

The following properties were evaluated in each of the storage conditions:

**Table 8. Properties evaluated during the testing of formulation 3.**

| **Normal Cold (NC) after 2, 4 and 6 months of storage** | **Controlled Atmosphere (CA) after 4 and 6 months of storage** |
|---|---|
| Appearance (Scald) | Appearance (Scald) |
| Physiology and quality at 0.10 and 20°C | Physiology and quality at 0.10 and 20°C |
| Respiration rate | Respiration rate |
| Production of ethylene | Production of ethylene |
| Colour of the flesh and skin | Colour of the flesh and skin |
| Firmness | Firmness |
| Content in soluble solids | Content in soluble solids |
| Acidity | Acidity |
| Weight loss | Weight loss |

A sampling and continuous analysis of each of the laboratory chambers in which the trial was carried out was performed.

### Conclusions:

From the results obtained in the present study, it is concluded that treatment with formulation 3 is the best treatment to maintain good quality of the apples and slow down the development of surface scald.

### Example 2: Study of the effectiveness of formulation 1 in a post-harvest treatment

In the present study of effectiveness, formulation 1, as it is described in table 4 of the present application, was applied in 4 facilities, wherein 4 post-harvest treatments were applied to fruit, using said formulation in different concentrations and fruit in different conditions.

### 2. A- Factory 1 (Lleida, Spain):

### Methodology:

0.2% (v/v) of formulation 1 was applied to pears in the basin of an unloader on a production line of the factory when they were removed from the chamber. The fruit had been previously treated with 1-methylcyclopropane (1-MCP) and the control sample showed significant problems due to friction on the line and physiological disorders and scald caused by blows and friction on the line and in the brushes.

After the week of treatment, the following results were observed:
Control without Post-preservation treatment: >30% damages due to friction on the line.

Fruit treated in the unloader with 0.2%: <10% damages due to friction on the line.

As a result of the application of the treatment, an improvement in both the protection of the fruit and its shine was observed, and in particular, it was observed that damages caused by friction were significantly reduced by more than 50% and, to the same extent, the fruit had a shine that gave it a better commercial appearance.

### 2. B- Factory 2(Lleida, Spain):

### Methodology:

The formulation 1 was applied in a proportion of 3 litres / 1000 of water (0.3% (v/v)) in the drencher to the Blanquilla pear coming from a controlled atmosphere (CA) chamber. The fruit had been treated prior to preservation with coatings to delay the occurrence of scald during cold storage.

After the week of treatment, the following results were observed:
Control without Post-preservation treatment: >30% signs of scald
Fruit treated in the drencher with 0.3% formulation 1: <5% signs of scald.

After two weeks, the treated fruit also began to show significant signs of scald.

### Conclusions:

The treatment with the formulation 1 manages to delay the appearance of scald for several days after the fruit leaves the CA cold storage. This is significant because after preservation, there is a sales period for fruit during which the fruit is stored in a conventional cold chamber and when the post-preservation development of scald begins, producing a large amount of damage caused by scald at that time. Treatment with the formulation 1 has demonstrated that it delays the development of scald for several days, which could be the period needed for sale, such that damage caused by scald in this process is reduced and the sales period is extended. It is important to take into account that this extended period for post-preservation sale is dependent on the greater or lesser sensitivity of the fruit to scald, the appearance of scald being delayed by less or more days, respectively.

### 2. C- Factory 3 (Lleida, Spain):

### Methodology:

The formulation 1 was applied in a proportion of 3.5 litres / 1000 of water (0.35% v/v) to the directly picked Limonera and Carmen pear in the basin of an unloader on a production line of the factory when they were removed from the chamber.

After the week of treatment, the following results were observed:
Control without Post-preservation treatment: >30% of physiological disorders due to friction
Fruit treated in the unloader with 0.35% formulation 1: <20% physiological disorders due to friction and a very good shine are produced.

When assessing the results obtained from this trial, it was taken into account that the brushes involved in the process were very stiff and had dry remains, such that reducing damages due to friction could not be optimized.

### Conclusions:

The treatment improved the appearance and shine of the fruit; however, damages due to friction were not reduced as effectively as in other trials due to the poor state of the brushes. Therefore, it is necessary to pay attention to the state of the brushes before applying the treatments. Despite these poor conditions, an improvement in the appearance and state of the fruit was observed.

### 2. D- Factory 4 (Zaragoza, Spain):

### Methodology:

The formulation 1 was applied in a dosage of 3.5 litres / 1000 of water (0.35% (v/v)) to a very old Conference pear coming from CA, which had already been on sale for a month, in a water unloader, such that the intended effect of the treatment was basically that of improving its commercial appearance. Due to the ageing of the fruit, a reliable study on the reduction of physiological disorders due to friction could not be expected, even more so in the case of this factory, with an old production line in not very good conditions, which continuously struck and rubbed against the fruit.

After the week of treatment, the following results were observed:
The application of the treatment improved the commercial state of the fruit, giving it shine and improving its appearance, such that the improvements of the application were evident. Regarding control of the physiological disorders, also known as scald, due to friction, it was also observed that its reduction was not as significant as expected.

### Conclusions:

The application of formulation 1 during the sales period after cold storage, even in the case of fruit with a long post-preservation time, and in a state that is not good enough, is beneficial for improving its commercial aspect, especially for making it healthier and shinier so that it is more marketable.

### Example 3: Study of the effectiveness of formulation 2 in a post-harvest treatment:

### 3. A- Factory 5 (Lleida, Spain):

### Methodology:

In the present study of effectiveness, formulation 2 which contains Sunflower lecithin described in table 5 of the present application, was applied in a facility where a post-harvest treatment was carried out on pears using said formulation in a concentration of 0.4% (v/v) following its removal from the chamber in controlled atmosphere (CA) and before entering normal atmosphere (NA), then spending approximately 20 days in the NA on the production line. This study was carried out to verify 1) the delay in the appearance of physiological scald when passing from CA to NA and 2) to verify the effectiveness in controlling scald due to friction on the line and maintaining the good appearance and marketability thereof, after passing through CA, then through NA and making the fruit marketable.

The results obtained were excellent, as shown in the photographs below:
Pears of the Blanquilla variety were treated in the drencher with the formulation 2 (with sunflower lecithin) after 9 months of cold storage in a controlled atmosphere (CA) and then were introduced into a normal atmosphere (NA) chamber in order to proceed with their progressive sale. After approximately 20 days in NA, the fruit had a healthy appearance without symptoms of physiological scald. The treatment was carried out after it had been removed from the CA chamber and before it was introduced into the NA chamber. As the fruit was marketed, the presence / absence of physiological scald was first assessed when removed from the NA. Later, the fruit was prepared and the damages due to friction scald, as well as the appearance and health of the fruit after being marketed, were evaluated.

It was possible to verify that:
1.- The fruit treated with formulation 2, showed effectiveness in delaying the appearance of physiological scald, since symptoms thereof were not evident (see figures 1 and 2). Likewise, the fruit had a good appearance and was healthy with a natural shine, a characteristic provided by the coating.
2.- After preparing the fruit, significant losses caused by friction scald were not evident. Likewise, the fruit had a healthy appearance and a natural shine that made it very marketable (see figure 3).

In conclusion, the post-harvest application of formulation 2 made with sunflower lecithin, has shown effectiveness in:
1.- Delaying the appearance of symptoms of physiological scald after changing from storage in the controlled atmosphere, CA, to storage in the normal atmosphere, NA.
2. It has shown effectiveness in significantly reducing (in this case, almost completely reducing) damages caused by friction scald after preparation.
3.- The formulation provides a healthy appearance and a natural shine that increases its marketability.

### Example 4: Study of the effectiveness of formulation 3 in a post-harvest treatment for plums (Chile)

A comparative study with various treatments of formulation 3 was carried out to determine the effectiveness of the formulation, object of the invention, in a facility where a post-harvest treatment was carried out on plums. In order to evaluate said effectiveness, a group of fruit (called a control group), to which no type of coating is applied, were storage in the same conditions.

The treatments applied were the following:

**Table 9. Treatment and form of application during the testing of formulation 3.**

| Treatment | Application |
|---|---|
| Decco Lustr 255 | 1L Wax/5000 Kg fruit |
| "Formulation 3" 2% | 800cc/Bins |
| "Formulation 3" 5% | 800cc/Bins |

Decco Lustr 255 is a vegetable oil-based wax.

### Methodology

The treatments described in the previous section were applied to several groups of fruit, and assessments were made on weight loss (see figure 7) and on scald on both the outer appearance as well as the inner appearance (see figures 8, 9, 10, 11, 12, 13 and 14), by means of cross sections. Said assessments were made at various times during the preservation period:
- 30 days of preservation at 0°C,
- the subsequent 7 days being subjected to room temperature (RT°), after being preserved at 0°C during a previous period of 30 days,
- 55 days of preservation at 0°C, and
- the subsequent 7 days being subjected to room temperature (RT°), after being preserved at 0°C during a previous period of 55 days,

The room temperature (RT°) of all cases is 20°C.

### Results

As may be seen in the graph on weight loss, the fruit treated with formulation 3 in a concentration of 2% (v/v) and 5% (v/v) showed less weight loss and better external appearance and flesh preservation.

### Conclusions

The formulation 3 which was applied at both 2% and 5% had good control over dehydration.

The formulation 3 preparation applied at 2% shows control over dehydration which is slightly better than the 5% dosage in the evaluation at 30 days in cold storage, decreasing the difference in the evaluation at 55 days. Likewise, the longer the assessment at room temperature, the smaller the difference.

Treatments with formulation 3 preserve the bloom which is the natural wax of fruit, thus giving it a better commercial and natural appearance despite being coated with the dilution of the preparation.

Therefore, the formulation 3 has demonstrated good qualities in preserving plums.

### Example 5: Trial on the coating of avocados (Chile)

### Methodology

A comparative study with various treatments of formulation 3 was carried out to determine the effectiveness of the formulation, object of the invention, in a facility where a post-harvest treatment was carried out on avocados. In order to evaluate said effectiveness, a group of fruit (called a control group), to which no type of coating is applied, were storage in the same conditions.

The treatments applied were the following:

**Table 10. Treatment and form of application the during the testing of formulation**

| Treatment | Application |
|---|---|
| Decco Lustr 255 | 1L Wax/6000 Kg fruit |
| Decco Lustr 255 + "Formulation 3" 2% | 1L Wax/4500 Kg fruit + "Formulation 3" 2% |
| "Formulation 3" 2% | 4500 Kg fruit |

The fruit to which Decco Lustr 255 + "Formulation 3" in a concentration of 2% (v/v) was applied consisted in the application of Decco Lustr 225 to 450 kg of fruit, and then applying a treatment of 2% of Formulation 3.

### Methodology

The treatments described in the previous section were applied to various groups of fruit and assessments were made on weight loss (see figures 15 and 20) at various times during the preservation period:
- 15 days at 5°C,
- 30 days at 5°C,
- 4 days at 20°C, after a previous period of 30 days at 5°C, and
- 7 days at 20°C, after a previous period of 30 days at 5°C.

And another assessment of weight loss after:
- 15 days at 5°C,
- 44 days at 5°C, and
- 5 days at 20°C, after a previous period of 30 days at 5°C.

Furthermore, the dispersion of fruit ripeness (see figures 16 and 21) is assessed after a preservation period of 31 days at 5°C, and during the subsequent 1 to 10 days when the fruit is stored at 20°C. The same assessment was also made after 31 days at 5°C, and during the subsequent 1 to 10 days when the fruit is stored at 20°C.

On the other hand, the colour change (see figures 17 and 22) after preservation periods of 31 days at 5°C; 30 days at 5°C and 4 days at 20°C (RT°); and 30 days at 5°C and 7 days at 20°C (RT°) was assessed. In addition, the state of the fruit after periods of 44 days at 5°C; 44 days at 5°C and 2 days at 20°C (RT°); and 44 days at 5°C and 5 days at 20°C (RT°) was assessed.

The outer appearance and the state of the flesh of the avocados were also assessed by means of a cross section at various times during the preservation period (see figures 18, 19, 23 and 24).

### Results:

The application of the formulation, object of the invention, has reduced weight loss, improved internal and external appearance, and has also considerably increased commercial life.

### Conclusions:

The formulation 3 demonstrated good properties in reducing weight loss, maintaining firmness, reducing internal and external browning, homogenization in colour ripeness, and ultimately, in improving the appearance and marketability of avocados.

Therefore, the formulation 3 is a good alternative to extend the commercial life of avocados.

### Example 6: Trial of the coating on kiwis (Chile).

A comparative study with various treatments of formulation was carried out to determine the effectiveness of the formulation, object of the invention, in a facility where a post-harvest treatment was carried out on kiwis. The treatments applied were the following:
T0: Which is a control group of fruit to which no type of coating is applied, were storage in the same conditions.
T1: formulation 3 diluted to 2% (v/v) was applied
T2: formulation 3 diluted to 5% (v/v) was applied

The 3 treatments described were applied by immersing a total of 1800 kg of kiwi.

### Methodology

The flesh firmness was assessed through the "LB-F" index (see figures 25 to 29) which measures the resistance of the fruit to being pierced by a 5/16-inch steel tip (8 mm plunger). This index correlates fruit ripeness with the resistance to piercing by said needle, which is called a penetrometer. Said measurements are made at the following periods of fruit preservation:
- 30 days of storage at 0°C,
- 30 days of storage at 0°C, and 10 days at 20°C
- 47 days of storage at 0°C,
- 47 days of storage at 0°C, and 10 days at 20°C
- 47 days of storage at 0°C, and 15 days at 20°C

Furthermore, assessments were made on the percentage of weight loss (see figures 30 to 32). Said measurements are made at the following periods of fruit preservation:
- 30 days of storage at 0°C,
- 30 days of storage at 0°C, and 10 days at 20°C
- 47 days of storage at 0°C, and 10 days at 20°C

Furthermore, assessments were made on the firmness of the columella (see figures 33 to 36). Said measurements are made at the following periods of fruit preservation:
- 30 days of storage at 0°C,
- 30 days of storage at 0°C, and 10 days at 20°C
- 47 days of storage at 0°C,
- 47 days of storage at 0°C, and 10 days at 20°C

### Results and conclusions:

Formulation 3 has demonstrated very good properties in controlling weight loss, maintaining firmness, and most importantly, maintaining firmness of the columella (white part of the kiwi flesh), which has proven to be a good treatment to extend the commercial life of kiwis.

On average, the dosage of 2% seems to be the one recommended for this fruit.

### Example 7: Trial of the formulation 4 on melons. Factory in Onda (Castellón, Spain)

A comparative study with various treatments of formulation was carried out to determine the effectiveness of the formulation, object of the invention, in a facility where a post-harvest treatment was carried out on melons. The treatments applied were the following:
T1: Formulation 4 diluted to 10% (v/v) in combination with Cinnamaldehyde 30% diluted to 0.8% (v/v) were applied
T2: Formulation 4 diluted to 10% (v/v) in combination with Cinnamaldehyde 30% diluted to 0.8% (v/v) and Potassium Phosphite 45% diluted to 0.4% (v/v) were applied
T3: Formulation 4 diluted to 10% (v/v) in combination with Imazalil (as sulphate) 7.5% diluted to 0.4% (v/v) were applied
T4: This is a control group of fruit to which water was applied

### Methodology

The 4 treatments described were applied by drenching, with 1000 litres of solution with 10% of dilution of formulation 4 to a total of 60.000 kg of melons. After said treatments, the fruit is stored in two different conditions of length and temperature:
- 19 days of storage at 20°C,
- 19 days of storage at 0°C, and 1 day at 10°C and 15 days at 17-18°C

At the end of both storage periods, the following parameters of the appearance of the skin of the fruit were measured:
- Percentage of Decay (%): This is the percentage relating to rotten fruit, and
- Percentage of Efficacy(%): This is the measure of the efficacy of each treatment. These values are calculated by the Abbot formula: ((% Decay of the group control - % Decay of the treatment)/(% Decay of the group control))x100.

Furthermore, at the end of the second storage, the following quality parameters were measured:
- Soluble Solids Contained (SSC) (°Brix): This parameter measures the amount of sugars comprised in fruits, and it is measured by refractometer. The higher the value is, the more the fruit is mature
- Total Acidity (TA) valorated with NaOH 0,1N (g citric/100 ml juice). This parameter measures the acidity of the acid which is present in fruit in a majority portion.
- Maturity Index (MI) which is an index calculated with the relationship between °Brix / Acidity
- Max. Compression by penetrometer. It is the measurement of firmness by means of a penetrometer. A mayor value corresponds with a less ripe fruit.

### Results:

The melons that were treated with treatments 1, 2 and 3 did not shown brown specks at the end of the storage (see figures 37.1 and 37.2). Additionally, the appearance of the pulp of the treated melons was clearly better than those that were not treated (see figures 38.1 and 38.2).

Additionally, the results of this assessment the appearance of the skin of the fruit are resumed in the following table:

**Table 11. Results of the efficacy for each treatment of the present study and for each period of preservation.**

| Treatment | 19 days at 20°C | | 19 days at 20°C + 1 day at 10°C + 15 days at 17-18°C | |
|---|---|---|---|---|
| | Decay (%) | Efficacy (%) | Decay (%) | Efficacy (%) |
| T1 | 3.1 | 67 | 34.4 | - |
| T2 | 3.1 | 67 | 10.6 | - |
| T3 | 0 | 100 | 9.3 | 71.1 |
| T4 | 9.4 | - | 31.2 | - |

Finally, the results obtained for the quality parameters measured in the present study were:

**Table 12. Quality parameters measured in the present study.**

| Treatment | SSC (°Brix) | TA(g citric/100juice) | MI | Max. Compression load by penetrometer (Kg) |
|---|---|---|---|---|
| T1 | 11.5 | 0.1536 | 74.87 | 1.25 |
| T2 | 12.0 | 0.1408 | 85.23 | 1.40 |
| T3 | 11.3 | 0.1920 | 58.85 | 1.55 |
| T4 | 12.1 | 0.1408 | 85.94 | 1.35 |

### Conclusions.

Application of formulation 4 in melons, has demonstrated the following advantages at the end of cold storage:
1.-Delay aging and senescence, and better firmness, as it is shown in quality parameters evaluated at the end of storage
2.- Better aspect and reduction of oxidation of fruits, as can be sawn in the pictures attached. Fruits treated has maintained freshness whereas fruit of control with no treatment practically have lost all their commercial properties.
3.- Mixing with fungicides have controlled decay development of the fruits.

The present application and invention further includes the subject matter of the following numbered clauses
1. A method of post-harvest treatment on fruit characterised in that it comprises applying an edible aqueous formulation comprising at least one phospholipid, or at least one polysorbate, or at least a sorbitan ester, or at least a sucrose ester of fatty acids or at least a sucroglyceride of fatty acids or a combination thereof, being the application during any one of the stages of a post harvesting period.
2. The method according to clause 1, wherein said aqueous formulation is diluted in water at a concentration comprised between 0.1% to 10 % (v/v).
3. The method according to any one of clauses 1 to 2, wherein said aqueous formulation is in liquid state and is applied via drencher, basin, un loader or preparation water lines.
4. The method according to any one of clauses 1 to 2, wherein said aqueous formulation is in aerosol form and is applied via spray, pulverisation or fumigation.
5. The method according to any one of clauses 1 to 4, wherein said method further comprises applying at least one chemical antifungal agent or at least one anti-scald compound, or at least one antioxidant, or at least one biocide or at least one disinfectant or a combination thereof.
6. An aqueous formulation for post-harvest treatment on fruit characterised in that it comprises between 1 and 30 % by weight of a phospholipid, or between 0.1 and 20 % by weight of a polysorbate or between 0.1 and 20 % by weight of a sorbitan ester or between 0.1 and 20% sucrose ester of fatty acids or between 0.1 and 20% sucrose glycerids of fatty acids or combination thereof with respect to the weight of the formulation and wherein the sum of the amount of all the components is equal to 100%.
7. The aqueous formulation according to clause 6, wherein said aqueous formulation further comprises at least one additive selected from the group consisting of a glycol, an alcohol, a cellulose derivate, a defoamer, a antioxidant, a fungicidal agent, an one anti-scald compound or a combination thereof.
8. The aqueous formulation according to any of the clauses 6 or 7, wherein said formulation is in liquid or aerosol form.
9. The aqueous formulation according to any one of clauses 6 to 8, wherein the phospholipid is lecithin of animal or plant origin.
10. The aqueous formulation according to clause 9, wherein the phospholipid is lecithin from egg yolk, sunflower, soy, rapeseed, cotton, maize or milk.
11. The aqueous formulation according to any one of clauses 6 to 10, wherein the glycol is selected from the group consisting of glycerin, propylene glycol, dipropylene glycol or a combination thereof.
12. The aqueous formulation according to any of clauses 6 to 10, wherein the cellulose derivate is selected from the group consisting of methylcellulose, ethylcellulose, hydroxyethylmethylcellulose, hydroxypropyl cellulose, carboxymethylcellulose, or a polymer of said cellulose derivate and a combination thereof, wherein the polymers mentioned in this group of compounds are the polymers of said cellulose derivate.
13. A dilution which comprises the aqueous formulation described in clause 6, being said aqueous formulation diluted in water at a concentration comprised between 0.1% to 10% (v/v).

## Claims

1. A formulation comprising:
0.05% sucrose esters of fatty acids;
0.02% cellulose derivative;
0.05% glycol;
0.05% alcohol;
0.03% glucose polymer;
0.01% potassium sorbate;
0.02% defoamer;
water qs
with respect to the weight of the formulation.

2. The formulation according to claim 1, wherein the glycol is selected from the group consisting of: glycerin, propylene glycol, dipropylene glycol or a combination thereof.

3. The formulation according to any preceding claim, wherein the cellulose derivative is selected from the group consisting of: methylcellulose, ethylcellulose, hydroxyethylmethylcellulose, hydroxypropyl cellulose, carboxymethylcellulose, or a polymer of said cellulose derivative or a combination thereof.

4. The formulationaccording to any preceding claim, wherein the formulation further comprises an antioxidant.

5. The formulation according to claim 4, wherein the antioxidant is selected from the group consisting of: citric acid, ascorbic acid, butylated hydroxyanisole (BHA), butylated hydroxytoluene (BHT), tert-butylhydroquinone (TBHQ), lactic acids, citric acids, tartrates, propyl gallates, 6-O-Palmitoylascorbic acid, food additives or a combination thereof.

6. The formulation according to claim 4, wherein the antioxidant is selected from the group consisting of: diphenylamine, methyldiphenylamine, ethoxyquin or a combination thereof.

7. The formulation according to any preceding claim, wherein the formulation further comprises an antifungal agent.

8. The formulation according to claim 7, wherein the antifungal agent is selected from the group consisting of: imazalil, tiabendazole, pyrimethanil, fludioxonil, benzimidazoles, imidazoles, strobilurins, phthalimides, iprodione, vinclozolins, carboximides or a combination thereof.

9. The formulation according to claim 7, wherein the antifungal agent is a natural extract or active ingredient of natural extracts, selected from the group consisting of:
cinnamon, clove, citrus, mint and eucalyptus extracts, citronella, eugenol, cinnamaldehyde, and thymol, or a combination thereof.

10. The formulation according to any preceding claim, wherein the formulation further comprises an anti-scald agent.

11. The formulation according to any preceding claim, wherein the formulation further comprises at least one biocide or disinfectant.

12. The formulation according to any preceding claim, wherein the formulation is diluted in water at a concentration comprised between 0.1% to 10% (v/v).

13. The formulation according to claim 12, wherein the diluted formulation is in a liquid form and is applied via a drencher, basin, loader or preparation water lines.

14. The formulation according to claim 12, wherein the diluted formulation is in aerosol form and is applied via spray, pulverisation or fumigation.

15. A method of post-harvest treatment on fruit comprising applying an edible formulation of any one of claims 1 to 14 to fruit during any one of the stages of a post harvesting period.
